# EUROPEAN PATENT APPLICATION

(11) **EP 3 136 644 A1**
(43) Date of publication of application: **01.03.2017**
(21) Application number: 14892105.9
(22) Date of filing: 15.05.2014
(51) Int. Cl.: H04L 5/14, H04L 1/18

(54) **DATA TRANSMISSION APPARATUSES AND METHODS**

(71) Applicant: HUAWEI TECHNOLOGIES CO., LTD., Guangdong 518129 (CN)
(72) Inventor: MIAO, Jinhua, Shenzhen Guangdong 518129 (CN); QUAN, Wei, Shenzhen Guangdong 518129 (CN); YANG, Xiaodong, Shenzhen Guangdong 518129 (CN); ZHANG, Jian, Shenzhen Guangdong 518129 (CN); MA, Sha, Shenzhen Guangdong 518129 (CN)
(74) Representative: Goddar, Heinz J.
(86) International application number: PCT/CN2014/077582
(87) International publication number: WO 2015/172363

(57) **Abstract**

An apparatus for data transmission according to an embodiment of the present invention includes: a processing module, configured to determine a transmission time interval TTI for performing data transmission with user equipment UE; and a transmission module, configured to perform data transmission with the UE by using the determined TTI; where the TTI is shorter than 1 ms. By reducing a length of a TTI, a minimum unit of data scheduling is shortened, and therefore, an RTT is reduced. Another apparatus is disclosed. By determining an HARQ time sequence according to a processing delay of UE, an HARQ process becomes compact in time, and an RTT is effectively shortened.

## Description

### TECHNICAL FIELD

The present invention relates to the field of wireless communications technologies, and in particular, to an apparatus and a method for data transmission.

### BACKGROUND

A round trip time (Round Trip Time, RTT) is an important indicator for measuring performance of a wireless communications system, and generally refers to a time from starting of data transmission by a transmit end to reception of an acknowledgement from a receive end by the transmit end.

In a time division duplex (Time Division Duplexing, TDD) system, a hybrid automatic repeat request HARQ (Hybrid Automatic Repeat Request, HARQ) mode is generally used for data scheduling. In a same HARQ process, after transmitting data, a transmit end does not transmit a next data packet before a preset maximum feedback time expires. Therefore, if an ACK can be received as quickly as possible, a time interval for transmitting data packets in the same HARQ process can be shortened, an RTT can be reduced, and data transmission efficiency can be improved.

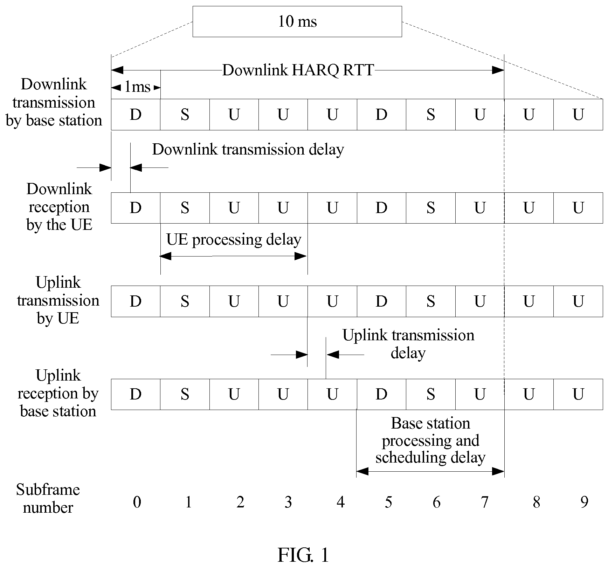

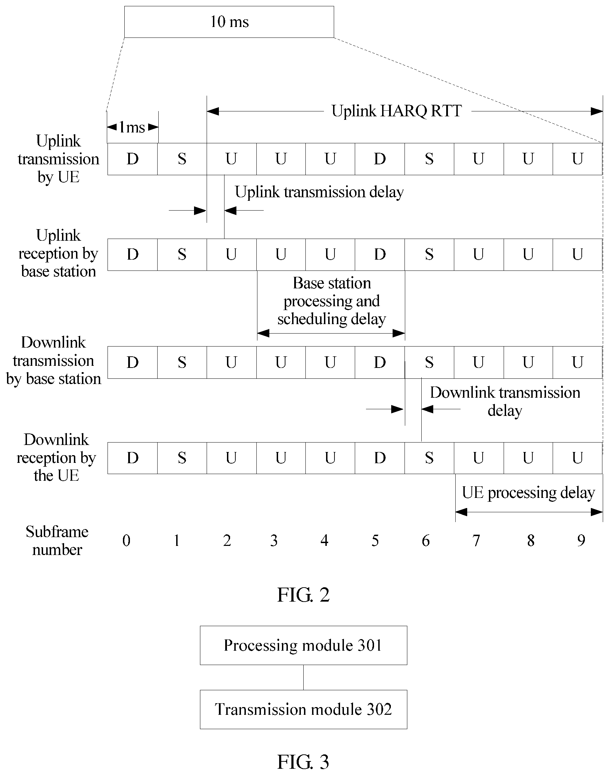

In the TDD system that uses the HARQ mode for data scheduling, for a downlink HARQ RTT, reference may be made to FIG. 1, and for an uplink HARQ RTT, reference may be made to FIG. 2. In FIG. 1 and FIG. 2, "D" represents a downlink subframe, "S" represents a special subframe (S subframe), and "U" represents an uplink subframe.

It can be seen from FIG. 1 that, the downlink HARQ RTT includes the following four parts: a downlink transmission delay, a user equipment (User Equipment, UE) processing delay (including a delay in processing such as UE decoding and packet assembly), an uplink transmission delay, and a base station processing and scheduling delay (including a delay in processing such as base station decoding, scheduling, and packet assembly).

It can be seen from FIG. 2 that, the uplink HARQ RTT includes the following four parts: an uplink transmission delay, a base station processing and scheduling delay (including a delay in processing such as base station decoding, scheduling, and packet assembly), a downlink transmission delay, and a UE processing delay (including a delay in processing such as UE decoding and packet assembly).

Currently, there is no method that can effectively reduce the RTT and improve data transmission efficiency in the TDD communications system.

### SUMMARY

Embodiments of the present invention provide an apparatus and a method for data transmission, which are used to effectively reduce an RTT and improve data transmission efficiency.

According to a first aspect, an embodiment of the present invention provides an apparatus for data transmission in a Time Division Duplex TDD system, where the apparatus includes:
a processing module, configured to determine a transmission time interval TTI for performing data transmission with user equipment UE; and
a transmission module, configured to perform data transmission with the UE by using the TTI determined by the processing module; where
the TTI is shorter than 1 ms.

In this solution, by using a TTI shorter than that in an existing TDD system, a minimum unit of data scheduling is shortened. Particularly, a delay in waiting for an available uplink subframe is reduced when UE transmits uplink data, and/or a delay in waiting for an available downlink subframe is reduced when a base station transmits downlink data, and therefore, an RTT in the TDD system is reduced.

With reference to the first aspect, in a first possible implementation manner,
the processing module is further configured to determine a TDD configuration and a special subframe S subframe configuration of a radio frame; and
the transmission module is specifically configured to perform data transmission with the UE by using the TTI, and the TDD configuration and the S subframe configuration of the radio frame that are determined by the processing module.

With reference to the first possible implementation manner of the first aspect, in a second possible implementation manner, the S subframe configuration includes:
if a cell coverage radius is greater than a preset coverage radius threshold, an S subframe in the radio frame includes M consecutive subframes, and a length of a guard period GP in the S subframe is determined according to the cell coverage radius; where
   M is an integer that is greater than 1.

With reference to the first possible implementation manner of the first aspect, in a third possible implementation manner, the TDD configuration includes: in the radio frame, a downlink-to-uplink switch-point periodicity is not greater than one half of a length of the radio frame.

With reference to the first possible implementation manner of the first aspect, in a fourth possible implementation manner, the S subframe configuration includes:
if one radio frame includes a plurality of S subframes, some S subframes include sounding reference signal SRS signals, and other S subframes do not include SRS signals.

With reference to the first aspect, in a fifth possible implementation manner,
the processing module is further configured to determine, when a broadcast channel occupies first two symbols in a second subframe in a radio frame, to skip transmitting a physical downlink control channel PDCCH on the first two symbols in the second subframe in the radio frame; and
the transmission module is specifically configured to skip transmitting the PDCCH on the first two symbols in the second subframe in the radio frame to the UE.

With reference to the first aspect, in a sixth possible implementation manner,
the processing module is further configured to determine that a broadcast channel occupies a first subframe in a radio frame; and
the transmission module is specifically configured to transmit the broadcast channel in the first subframe in the radio frame to the UE.

With reference to the first aspect, in a seventh possible implementation manner,
the processing module is further configured to determine a length of a physical random access channel PRACH, and if the determined length of the PRACH is greater than a length of a subframe, determine that the PRACH occupies C consecutive uplink subframes, where C is a positive integer; and
the transmission module is specifically configured to receive, by using the PRACH determined by the processing module, an uplink random access preamble transmitted by the UE.

With reference to the seventh possible implementation manner of the first aspect, in an eighth possible implementation manner, the processing module is specifically configured to determine that an S subframe and/or P downlink subframes are included between the C consecutive uplink subframes occupied by the PRACH, where P is a positive integer.

With reference to the first possible implementation manner of the first aspect, the second possible implementation manner of the first aspect, the third possible implementation manner of the first aspect, or the fourth possible implementation manner of the first aspect, in a ninth possible implementation manner, the transmission module is further configured to transmit, by using a first broadcast message or a radio resource control RRC message, the TDD configuration and the S subframe configuration determined by the processing module to the UE.

With reference to the first possible implementation manner of the first aspect, the second possible implementation manner of the first aspect, the third possible implementation manner of the first aspect, or the fourth possible implementation manner of the first aspect, in a tenth possible implementation manner, the TDD configuration and the S subframe configuration of the radio frame are prescribed by the processing module with the UE.

With reference to the first aspect, the first possible implementation manner of the first aspect, the second possible implementation manner of the first aspect, the third possible implementation manner of the first aspect, the fourth possible implementation manner of the first aspect, the fifth possible implementation manner of the first aspect, the sixth possible implementation manner of the first aspect, the seventh possible implementation manner of the first aspect, the eighth possible implementation manner of the first aspect, the ninth possible implementation manner of the first aspect, or the tenth possible implementation manner of the first aspect, in an eleventh possible implementation manner, the transmission module is further configured to transmit, by using a second broadcast message or an RRC message, the TTI determined by the processing module to the UE.

With reference to the first aspect, the first possible implementation manner of the first aspect, the second possible implementation manner of the first aspect, the third possible implementation manner of the first aspect, the fourth possible implementation manner of the first aspect, the fifth possible implementation manner of the first aspect, the sixth possible implementation manner of the first aspect, the seventh possible implementation manner of the first aspect, the eighth possible implementation manner of the first aspect, the ninth possible implementation manner of the first aspect, or the tenth possible implementation manner of the first aspect, in a twelfth possible implementation manner, the TTI is prescribed with the UE.

With reference to the first aspect, the first possible implementation manner of the first aspect, the second possible implementation manner of the first aspect, the third possible implementation manner of the first aspect, the fourth possible implementation manner of the first aspect, the fifth possible implementation manner of the first aspect, the sixth possible implementation manner of the first aspect, the seventh possible implementation manner of the first aspect, the eighth possible implementation manner of the first aspect, the ninth possible implementation manner of the first aspect, the tenth possible implementation manner of the first aspect, the eleventh possible implementation manner of the first aspect, or the twelfth possible implementation manner of the first aspect, in a thirteenth possible implementation manner, the processing module is further configured to determine a time sequence of a hybrid automatic repeat request HARQ process for performing data transmission with the UE by the transmission module; and
the transmission module is specifically configured to perform data transmission with the UE by using the time sequence of the HARQ process that is determined by the processing module; where
the time sequence of the HARQ process includes at least one of the following time sequences:
a first time interval between each downlink subframe for transmitting downlink control information DCI used for uplink scheduling and an uplink subframe for transmitting uplink data and corresponding to the downlink subframe, where the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay in reception processing of the DCI used for uplink scheduling, and a delay in uplink data packet assembly;
a second time interval between each downlink subframe for transmitting a physical hybrid automatic repeat indicator channel PHICH and an uplink subframe for transmitting retransmitted uplink data and corresponding to the downlink subframe, where the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, where n2 and Q are positive integers, and a TTI multiplied by Q is a sum of a delay in transmission of the PHICH, a delay in reception processing of the PHICH, and a delay in retransmitted uplink data packet assembly;
a third time interval between each uplink subframe for transmitting uplink data and each downlink subframe for transmitting a PHICH and corresponding to the uplink subframe, where the third time interval is a TTI multiplied by n3, and is set according to a first time interval between a corresponding uplink subframe for transmitting uplink data and a downlink subframe for transmitting DCI used for uplink scheduling and corresponding to the uplink subframe, n3 is a positive integer, and the third time interval is not less than a sum of a delay in transmission of the uplink data, a delay in reception processing of the uplink data, and a delay in PHICH data packet assembly; or
a fourth time interval between each downlink subframe for transmitting downlink data and each uplink subframe for transmitting an uplink feedback and corresponding to the downlink subframe, where the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, where n4 and W are positive integers, and a TTI multiplied by W is a sum of a delay in transmission of the downlink data, a delay in reception processing of the downlink data, and a delay in performing uplink feedback packet assembly.

According to a second aspect, an embodiment of the present invention provides an apparatus for data transmission in a Time Division Duplex TDD system, where the apparatus includes:
a processing module, configured to determine a transmission time interval TTI for performing data transmission with a network; and
a transmission module, configured to perform data transmission with the network by using the TTI determined by the processing module; where
the TTI is shorter than 1 ms.

According to this solution, a TTI of 1 ms in an existing TDD system is shortened, and the shortened TTI is used for performing data transmission. Because data transmission is performed by using the TTI as a unit in the TDD system, a length of the TTI is reduced, and a minimum unit of data scheduling is shortened. Particularly, a delay in waiting for an available uplink subframe is reduced when UE transmits uplink data, and/or a delay in waiting for an available downlink subframe is reduced when a base station transmits downlink data, and therefore, an RTT in the TDD system is reduced.

With reference to the second aspect, in a first possible implementation manner,
the processing module is further configured to determine a TDD configuration and a special subframe S subframe configuration of a radio frame; and
the transmission module is specifically configured to perform data transmission with the network by using the TTI, and the TDD configuration and the S subframe configuration of the radio frame that are determined by the processing module.

With reference to the first possible implementation manner of the second aspect, in a second possible implementation manner, the S subframe configuration includes:
if a cell coverage radius is greater than a preset coverage radius threshold, an S subframe in the radio frame includes M consecutive subframes, and a length of a guard period GP in the S subframe is determined according to the cell coverage radius; where
   M is an integer that is greater than 1.

With reference to the first possible implementation manner of the second aspect, in a third possible implementation manner, the TDD configuration includes: in the radio frame, a downlink-to-uplink switch-point periodicity is not greater than one half of a length of the radio frame.

With reference to the first possible implementation manner of the second aspect, in a fourth possible implementation manner, the S subframe configuration includes:
if one radio frame includes a plurality of S subframes, some S subframes include sounding reference signal SRS signals, and other S subframes do not include SRS signals.

With reference to the second aspect, in a fifth possible implementation manner,
the processing module is further configured to determine, when a broadcast channel occupies first two symbols in a second subframe in a radio frame, that a physical downlink control channel PDCCH is not transmitted on the first two symbols in the second subframe in the radio frame; and
the transmission module is specifically configured to skip receiving, on the first two symbols in the second subframe in the radio frame, the PDCCH transmitted by the network.

With reference to the second aspect, in a sixth possible implementation manner,
the processing module is further configured to determine that a broadcast channel occupies a first subframe in a radio frame; and
the transmission module is specifically configured to receive, in the first subframe in the radio frame, the broadcast channel transmitted by the network.

With reference to the second aspect, in a seventh possible implementation manner,
the processing module is further configured to determine a length of a physical random access channel PRACH, and if the determined length of the PRACH is greater than a length of a subframe, determine that the PRACH occupies C consecutive uplink subframes, where C is a positive integer; and
the transmission module is specifically configured to transmit an uplink random access preamble to the network by using the PRACH determined by the processing module.

With reference to the seventh possible implementation manner of the second aspect, in an eighth possible implementation manner, the processing module is specifically configured to determine that an S subframe and/or P downlink subframes are included between the C consecutive uplink subframes occupied by the PRACH, where P is a positive integer.

With reference to the first possible implementation manner of the second aspect, the second possible implementation manner of the second aspect, the third possible implementation manner of the second aspect, or the fourth possible implementation manner of the second aspect, in a ninth possible implementation manner,
the transmission module is further configured to receive a TDD configuration and an S subframe configuration of a radio frame that are transmitted by the network by using a first broadcast message or a radio resource control RRC message; and
the processing module is specifically configured to use the TDD configuration and the S subframe configuration of the radio frame that are received by the transmission module, as the TDD configuration and the S subframe configuration of the radio frame that are determined.

With reference to the first possible implementation manner of the second aspect, the second possible implementation manner of the second aspect, the third possible implementation manner of the second aspect, or the fourth possible implementation manner of the second aspect, in a tenth possible implementation manner,
the TDD configuration and the S subframe configuration of the radio frame are prescribed by the processing module with the network.

With reference to the second aspect, the first possible implementation manner of the second aspect, the second possible implementation manner of the second aspect, the third possible implementation manner of the second aspect, the fourth possible implementation manner of the second aspect, the fifth possible implementation manner of the second aspect, the sixth possible implementation manner of the second aspect, the seventh possible implementation manner of the second aspect, the eighth possible implementation manner of the second aspect, the ninth possible implementation manner of the second aspect, or the tenth possible implementation manner of the second aspect, in an eleventh possible implementation manner,
the transmission module is further configured to receive the TTI that is transmitted by the network by using a second broadcast message or a radio resource control; and
the processing module is specifically configured to use the TTI received by the transmission module, as the determined TTI.

With reference to the second aspect, the first possible implementation manner of the second aspect, the second possible implementation manner of the second aspect, the third possible implementation manner of the second aspect, the fourth possible implementation manner of the second aspect, the fifth possible implementation manner of the second aspect, the sixth possible implementation manner of the second aspect, the seventh possible implementation manner of the second aspect, the eighth possible implementation manner of the second aspect, the ninth possible implementation manner of the second aspect, or the tenth possible implementation manner of the second aspect, in a twelfth possible implementation manner, the TTI is prescribed by the processing module with the network.

With reference to the second aspect, the first possible implementation manner of the second aspect, the second possible implementation manner of the second aspect, the third possible implementation manner of the second aspect, the fourth possible implementation manner of the second aspect, the fifth possible implementation manner of the second aspect, the sixth possible implementation manner of the second aspect, the seventh possible implementation manner of the second aspect, the eighth possible implementation manner of the second aspect, the ninth possible implementation manner of the second aspect, the tenth possible implementation manner of the second aspect, the eleventh possible implementation manner of the second aspect, or the twelfth possible implementation manner of the second aspect, in a thirteenth possible implementation manner,
the processing module is further configured to determine a time sequence of a hybrid automatic repeat request HARQ process for performing data transmission with the network by the transmission module; and
the transmission module is specifically configured to perform data transmission with the network by using the time sequence of the HARQ process that is determined by the processing module; where
the time sequence of the HARQ process includes at least one of the following time sequences:
a first time interval between each downlink subframe for transmitting downlink control information DCI used for uplink scheduling and an uplink subframe for transmitting uplink data and corresponding to the downlink subframe, where the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay in reception processing of the DCI used for uplink scheduling, and a delay in uplink data packet assembly;
a second time interval between each downlink subframe for transmitting a physical hybrid automatic repeat indicator channel PHICH and an uplink subframe for transmitting retransmitted uplink data and corresponding to the downlink subframe, where the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, where n2 and Q are positive integers, and a TTI multiplied by Q is a sum of a delay in transmission of the PHICH, a delay in reception processing of the PHICH, and a delay in performing retransmitted uplink data packet assembly;
a third time interval between each uplink subframe for transmitting uplink data and each downlink subframe for transmitting a PHICH and corresponding to the uplink subframe, where the third time interval is a TTI multiplied by n3, and is set according to a first time interval between a corresponding uplink subframe for transmitting uplink data and a downlink subframe for transmitting DCI used for uplink scheduling and corresponding to the uplink subframe, n3 is a positive integer, and the third time interval is not less than a sum of a delay in transmission of the uplink data, a delay in reception processing of the uplink data, and a delay in PHICH data packet assembly; or
a fourth time interval between each downlink subframe for transmitting downlink data and each uplink subframe for transmitting an uplink feedback and corresponding to the downlink subframe, where the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, where n4 and W are positive integers, and a TTI multiplied by W is a sum of a delay in transmission of the downlink data, a delay in reception processing of the downlink data, and a delay in performing uplink feedback packet assembly.

According to a third aspect, an embodiment of the present invention provides a method for data transmission in a Time Division Duplex TDD system, where the method includes:
determining a transmission time interval TTI for performing data transmission with user equipment UE; and
performing data transmission with the UE by using the determined TTI; where
the TTI is shorter than 1 ms.

According to this solution, a TTI of 1 ms in an existing TDD system is shortened, and the shortened TTI is used for performing data transmission. Because data transmission is performed by using the TTI as a unit in the TDD system, a length of the TTI is reduced, and a minimum unit of data scheduling is shortened. Particularly, a delay in waiting for an available uplink subframe is reduced when UE transmits uplink data, and/or a delay in waiting for an available downlink subframe is reduced when a base station transmits downlink data, and therefore, an RTT in the TDD system is reduced.

With reference to the third aspect, in a first possible implementation manner,
after the determining a TTI for performing data transmission with the UE, and before the performing data transmission with the UE, the method further includes: determining a TDD configuration and a special subframe S subframe configuration of a radio frame; and
the performing data transmission with the UE by using the determined TTI includes: performing data transmission with the UE by using the TTI, and the TDD configuration and the S subframe configuration of the radio frame that are determined.

With reference to the first possible implementation manner of the third aspect, in a second possible implementation manner, the S subframe configuration includes:
if a cell coverage radius is greater than a preset coverage radius threshold, an S subframe in the radio frame includes M consecutive subframes, and a length of a guard period GP in the S subframe is determined according to the cell coverage radius; where

M is an integer that is greater than 1.

With reference to the first possible implementation manner of the third aspect, in a third possible implementation manner, the TDD configuration includes: in the radio frame, a downlink-to-uplink switch-point periodicity is not greater than one half of a length of the radio frame.

With reference to the first possible implementation manner of the third aspect, in a fourth possible implementation manner, the S subframe configuration includes:
if one radio frame includes a plurality of S subframes, some S subframes include sounding reference signal SRS signals, and other S subframes do not include SRS signals.

With reference to the third aspect, in a fifth possible implementation manner,
after the determining a TTI for performing data transmission with the UE, and before the performing data transmission with the UE, the method further includes:
if a broadcast channel occupies first two symbols in a second subframe in a radio frame, determining to skip transmitting a physical downlink control channel PDCCH on the first two symbols in the second subframe in the radio frame; and
the performing data transmission with the UE includes: skipping transmitting the PDCCH on the first two symbols in the second subframe in the radio frame to the UE.

With reference to the third aspect, in a sixth possible implementation manner,
after the determining a TTI for performing data transmission with the UE, and before the performing data transmission with the UE, the method further includes: determining that a broadcast channel occupies a first subframe in a radio frame; and
the performing data transmission with the UE includes: transmitting the broadcast channel in the first subframe in the radio frame to the UE.

With reference to the third aspect, in a seventh possible implementation manner, before the performing data transmission with the UE, the method further includes:
determining a length of a physical random access channel PRACH; and
if the determined length of the PRACH is greater than a length of a subframe, determining that the PRACH occupies C consecutive uplink subframes, where C is a positive integer; and
the performing data transmission with the UE includes: receiving, by using the determined PRACH, an uplink random access preamble transmitted by the UE.

With reference to the seventh possible implementation manner of the third aspect, in an eighth possible implementation manner, after the determining that the PRACH occupies C consecutive uplink subframes, and before the performing data transmission with the UE, the method further includes:
determining that an S subframe and/or P downlink subframes are included between the C consecutive uplink subframes occupied by the PRACH, where P is a positive integer.

With reference to the first possible implementation manner of the third aspect, the second possible implementation manner of the third aspect, the third possible implementation manner of the third aspect, or the fourth possible implementation manner of the third aspect, in a ninth possible implementation manner,
after the determining a TDD configuration and an S subframe configuration, and before the performing data transmission with the UE, the method further includes:
transmitting, by using a first broadcast message or a radio resource control RRC message, the TDD configuration and the S subframe configuration that are determined to the UE.

With reference to the first possible implementation manner of the third aspect, the second possible implementation manner of the third aspect, the third possible implementation manner of the third aspect, or the fourth possible implementation manner of the third aspect, in a tenth possible implementation manner,
the TDD configuration and the S subframe configuration of the radio frame are prescribed with the UE.

With reference to the third aspect, the first possible implementation manner of the third aspect, the second possible implementation manner of the third aspect, the third possible implementation manner of the third aspect, the fourth possible implementation manner of the third aspect, the fifth possible implementation manner of the third aspect, the sixth possible implementation manner of the third aspect, the seventh possible implementation manner of the third aspect, the eighth possible implementation manner of the third aspect, the ninth possible implementation manner of the third aspect, or the tenth possible implementation manner of the third aspect, in an eleventh possible implementation manner,
after the determining a TTI for performing data transmission with the UE, and before the performing data transmission with the UE, the method further includes:
transmitting, by using a second broadcast message or an RRC message, the determined TTI to the UE.

With reference to the third aspect, the first possible implementation manner of the third aspect, the second possible implementation manner of the third aspect, the third possible implementation manner of the third aspect, the fourth possible implementation manner of the third aspect, the fifth possible implementation manner of the third aspect, the sixth possible implementation manner of the third aspect, the seventh possible implementation manner of the third aspect, the eighth possible implementation manner of the third aspect, the ninth possible implementation manner of the third aspect, or the tenth possible implementation manner of the third aspect, in a twelfth possible implementation manner, the TTI is prescribed with the UE.

With reference to the third aspect, the first possible implementation manner of the third aspect, the second possible implementation manner of the third aspect, the third possible implementation manner of the third aspect, the fourth possible implementation manner of the third aspect, the fifth possible implementation manner of the third aspect, the sixth possible implementation manner of the third aspect, the seventh possible implementation manner of the third aspect, the eighth possible implementation manner of the third aspect, the ninth possible implementation manner of the third aspect, the tenth possible implementation manner of the third aspect, the eleventh possible implementation manner of the third aspect, or the twelfth possible implementation manner of the third aspect, in a thirteenth possible implementation manner,
after the determining a TTI for performing data transmission with the UE, and before the performing data transmission with the UE, the method further includes: determining a time sequence of a hybrid automatic repeat request HARQ process for performing data transmission with the UE; and
the performing data transmission with the UE includes: performing data transmission with the UE by using the determined time sequence of the HARQ process; where
the time sequence of the HARQ process includes at least one of the following time sequences:
a first time interval between each downlink subframe for transmitting downlink control information DCI used for uplink scheduling and an uplink subframe for transmitting uplink data and corresponding to the downlink subframe, where the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay in reception processing of the DCI used for uplink scheduling, and a delay in uplink data packet assembly;
a second time interval between each downlink subframe for transmitting a physical hybrid automatic repeat indicator channel PHICH and an uplink subframe for transmitting retransmitted uplink data and corresponding to the downlink subframe, where the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, where n2 and Q are positive integers, and a TTI multiplied by Q is a sum of a delay in transmission of the PHICH, a delay in reception processing of the PHICH, and a delay in retransmitted uplink data packet assembly;
a third time interval between each uplink subframe for transmitting uplink data and each downlink subframe for transmitting a PHICH and corresponding to the uplink subframe, where the third time interval is a TTI multiplied by n3, and is set according to a first time interval between a corresponding uplink subframe for transmitting uplink data and a downlink subframe for transmitting DCI used for uplink scheduling and corresponding to the uplink subframe, n3 is a positive integer, and the third time interval is not less than a sum of a delay in transmission of the uplink data, a delay in reception processing of the uplink data, and a delay in PHICH data packet assembly; or
a fourth time interval between each downlink subframe for transmitting downlink data and each uplink subframe for transmitting an uplink feedback and corresponding to the downlink subframe, where the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, where n4 and W are positive integers, and a TTI multiplied by W is a sum of a delay in transmission of the downlink data, a delay in reception processing of the downlink data, and a delay in uplink feedback packet assembly.

According to a fourth aspect, an embodiment of the present invention provides a method for data transmission in a Time Division Duplex TDD system, where the method includes:
determining a transmission time interval TTI for performing data transmission with a network; and
performing data transmission with the network by using the determined TTI; where
the TTI is shorter than 1 ms.

According to this solution, a TTI of 1 ms in an existing TDD system is shortened, and the shortened TTI is used for performing data transmission. Because data transmission is performed by using the TTI as a unit in the TDD system, a length of the TTI is reduced, and a minimum unit of data scheduling is shortened. Particularly, a delay in waiting for an available uplink subframe is reduced when UE transmits uplink data, and/or a delay in waiting for an available downlink subframe is reduced when a base station transmits downlink data, and therefore, an RTT in the TDD system is reduced.

With reference to the fourth aspect, in a first possible implementation manner,
after the determining a TTI for performing data transmission with the network, and before the performing data transmission with the network, the method further includes: determining a TDD configuration and a special subframe S subframe configuration of a radio frame; and
the performing data transmission with the network by using the determined TTI includes: performing data transmission with the network by using the TTI, and the TDD configuration and the S subframe configuration of the radio frame that are determined.

With reference to the first possible implementation manner of the fourth aspect, in a second possible implementation manner, the S subframe configuration includes:
if a cell coverage radius is greater than a preset coverage radius threshold, an S subframe in the radio frame includes M consecutive subframes, and a length of a guard period GP in the S subframe is determined according to the cell coverage radius; where
   M is an integer that is greater than 1.

With reference to the first possible implementation manner of the fourth aspect, in a third possible implementation manner, the TDD configuration includes: in the radio frame, a downlink-to-uplink switch-point periodicity is not greater than one half of a length of the radio frame.

With reference to the first possible implementation manner of the fourth aspect, in a fourth possible implementation manner, the S subframe configuration includes:
if one radio frame includes a plurality of S subframes, some S subframes include sounding reference signal SRS signals, and other S subframes do not include SRS signals.

With reference to the fourth aspect, in a fifth possible implementation manner,
after the determining a TTI for performing data transmission with the network, and before the performing data transmission with the network, the method further includes: when a broadcast channel occupies first two symbols in a second subframe in a radio frame, determining that a physical downlink control channel PDCCH is not transmitted on the first two symbols in the second subframe in the radio frame; and
the performing data transmission with the network includes: skipping receiving, on the first two symbols in the second subframe in the radio frame, the PDCCH transmitted by the network.

With reference to the fourth aspect, in a sixth possible implementation manner,
after the determining a TTI for performing data transmission with the network, and before the performing data transmission with the network, the method further includes: determining that a broadcast channel occupies a first subframe in a radio frame; and
the performing data transmission with the network includes: receiving, in the first subframe in the radio frame, the broadcast channel transmitted by the network.

With reference to the fourth aspect, in a seventh possible implementation manner,
after the determining a TTI for performing data transmission with the network, and before the performing data transmission with the network, the method further includes:
determining a length of a physical random access channel PRACH; and
if the determined length of the PRACH is greater than a length of a subframe, determining that the PRACH occupies C consecutive uplink subframes, where C is a positive integer; and
the performing data transmission with the network includes: transmitting an uplink random access preamble to the network by using the determined PRACH.

With reference to the seventh possible implementation manner of the fourth aspect, in an eighth possible implementation manner, after the determining that the PRACH occupies C consecutive uplink subframes, and before the performing data transmission with the network, the method further includes:
determining that an S subframe and/or P downlink subframes are included between the C consecutive uplink subframes occupied by the PRACH, where P is a positive integer.

With reference to the first possible implementation manner of the fourth aspect, the second possible implementation manner of the fourth aspect, the third possible implementation manner of the fourth aspect, or the fourth possible implementation manner of the fourth aspect, in a ninth possible implementation manner,
the determining a TDD configuration and a special subframe S subframe configuration of a radio frame includes:
receiving a TDD configuration and a special subframe S subframe configuration of a radio frame that are transmitted by the network by using a first broadcast message or a radio resource control RRC; and
using the TDD configuration and the S subframe configuration that are received, as the TDD configuration or the S subframe configuration that is determined.

With reference to the first possible implementation manner of the fourth aspect, the second possible implementation manner of the fourth aspect, the third possible implementation manner of the fourth aspect, or the fourth possible implementation manner of the fourth aspect, in a tenth possible implementation manner,
the TDD configuration and the S subframe configuration are prescribed with the network.

With reference to the fourth aspect, the first possible implementation manner of the fourth aspect, the second possible implementation manner of the fourth aspect, the third possible implementation manner of the fourth aspect, the fourth possible implementation manner of the fourth aspect, the fifth possible implementation manner of the fourth aspect, the sixth possible implementation manner of the fourth aspect, the seventh possible implementation manner of the fourth aspect, the eighth possible implementation manner of the fourth aspect, the ninth possible implementation manner of the fourth aspect, or the tenth possible implementation manner of the fourth aspect, in an eleventh possible implementation manner,
the determining a TTI for performing data transmission with the network includes:
receiving the TTI that is transmitted by the network by using a second broadcast message or an RRC message; and
using the received TTI as the determined TTI for data transmission.

With reference to the fourth aspect, the first possible implementation manner of the fourth aspect, the second possible implementation manner of the fourth aspect, the third possible implementation manner of the fourth aspect, the fourth possible implementation manner of the fourth aspect, the fifth possible implementation manner of the fourth aspect, the sixth possible implementation manner of the fourth aspect, the seventh possible implementation manner of the fourth aspect, the eighth possible implementation manner of the fourth aspect, the ninth possible implementation manner of the fourth aspect, or the tenth possible implementation manner of the fourth aspect, in a twelfth possible implementation manner, the TTI is prescribed with the network.

With reference to the fourth aspect, the first possible implementation manner of the fourth aspect, the second possible implementation manner of the fourth aspect, the third possible implementation manner of the fourth aspect, the fourth possible implementation manner of the fourth aspect, the fifth possible implementation manner of the fourth aspect, the sixth possible implementation manner of the fourth aspect, the seventh possible implementation manner of the fourth aspect, the eighth possible implementation manner of the fourth aspect, the ninth possible implementation manner of the fourth aspect, the tenth possible implementation manner of the fourth aspect, the eleventh possible implementation manner of the fourth aspect, or the twelfth possible implementation manner of the fourth aspect, in a thirteenth possible implementation manner,
after the determining a TTI for performing data transmission with the network, and before the performing data transmission with the network, the method further includes:
determining a time sequence of a hybrid automatic repeat request HARQ process for performing data transmission with the network; and
the performing data transmission with the network includes: performing data transmission with the network by using the determined time sequence of the HARQ process; where
   the time sequence of the HARQ process includes at least one of the following time sequences:
   a first time interval between each downlink subframe for transmitting downlink control information DCI used for uplink scheduling and an uplink subframe for transmitting uplink data and corresponding to the downlink subframe, where the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay in reception processing of the DCI used for uplink scheduling, and a delay in uplink data packet assembly;
   a second time interval between each downlink subframe for transmitting a physical hybrid automatic repeat indicator channel PHICH and an uplink subframe for transmitting retransmitted uplink data and corresponding to the downlink subframe, where the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, where n2 and Q are positive integers, and a TTI multiplied by Q is a sum of a delay in transmission of the PHICH, a delay in reception processing of the PHICH, and a delay in retransmitted uplink data packet assembly;
   a third time interval between each uplink subframe for transmitting uplink data and each downlink subframe for transmitting a PHICH and corresponding to the uplink subframe, where the third time interval is a TTI multiplied by n3, and is set according to a first time interval between a corresponding uplink subframe for transmitting uplink data and a downlink subframe for transmitting DCI used for uplink scheduling and corresponding to the uplink subframe, n3 is a positive integer, and the third time interval is not less than a sum of a delay in transmission of the uplink data, a delay in reception processing of the uplink data, and a delay in PHICH data packet assembly; or
   a fourth time interval between each downlink subframe for transmitting downlink data and each uplink subframe for transmitting an uplink feedback and corresponding to the downlink subframe, where the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, where n4 and W are positive integers, and a TTI multiplied by W is a sum of a delay in transmission of the downlink data, a delay in reception processing of the downlink data, and a delay of UE in performing uplink feedback packet assembly.

According to a fifth aspect, an embodiment of the present invention provides an apparatus for data transmission in a Time Division Duplex TDD system, where the apparatus includes:
a processing module, configured to determine, according to a processing delay of user equipment UE, a time sequence of a hybrid automatic repeat request HARQ process for performing data transmission with the UE; and
a transmission module, configured to perform data transmission with the UE according to the time sequence of the HARQ process that is determined by the processing module.

According to this solution, in a case in which a processing delay of UE becomes short, a time sequence of an HARQ process may be reset according to the short processing delay of the UE, the whole HARQ process becomes compact in time, and therefore, an RTT is effectively shortened.

With reference to the fifth aspect, in a first possible implementation manner,
the processing delay of the UE includes: a delay of the UE in reception processing of downlink data or downlink signaling, and a delay of the UE in performing uplink data packet assembly, retransmitted uplink data packet assembly, or uplink signaling packet assembly.

With reference to the first possible implementation manner of the fifth aspect, in a second possible implementation manner,
the time sequence of the HARQ process includes one or more of the following time sequences:
a first time interval between each downlink subframe for transmitting downlink control information DCI used for uplink scheduling and an uplink subframe for transmitting uplink data and corresponding to the downlink subframe;
a second time interval between each downlink subframe for transmitting a physical hybrid automatic repeat indicator channel PHICH and an uplink subframe for transmitting retransmitted uplink data and corresponding to the downlink subframe; or
a fourth time interval between each downlink subframe for transmitting downlink data and each uplink subframe for transmitting an uplink feedback and corresponding to the downlink subframe; where
the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay of the UE in reception processing of the DCI used for uplink scheduling, and a delay of the UE in performing uplink data packet assembly;
the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, where n2 and Q are positive integers, and a TTI multiplied by Q is a sum of a delay in transmission of the PHICH, a delay of the UE in reception processing of the PHICH, and a delay of the UE in performing retransmitted uplink data packet assembly; and
the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, where n4 and W are positive integers, and a TTI multiplied by W is a sum of a delay in transmission of the downlink data, a delay of the UE in reception processing of the downlink data, and a delay of the UE in performing uplink feedback packet assembly.

With reference to the fifth aspect, the first possible implementation manner of the fifth aspect, or the second possible implementation manner of the fifth aspect, in a third possible implementation manner of the fifth aspect,
in a radio frame, a downlink-to-uplink switch-point periodicity is not greater than one half of a length of the radio frame.

With reference to the fifth aspect, the first possible implementation manner of the fifth aspect, the second possible implementation manner of the fifth aspect, or the third possible implementation manner of the fifth aspect, in a fourth possible implementation manner of the fifth aspect,
the processing module is further configured to determine, before the transmission module performs data transmission with the UE, a transmission time interval TTI for performing data transmission with the UE; and
the transmission module is specifically configured to perform data transmission with the UE by using the TTI and the time sequence of the HARQ process that are determined by the processing module; where
the TTI is shorter than 1 ms.

According to a sixth aspect, an embodiment of the present invention provides an apparatus for data transmission in a Time Division Duplex TDD system, where the apparatus includes:
a processing module, configured to determine, according to a processing delay of a network, a time sequence of a hybrid automatic repeat request HARQ process for performing data transmission with the network; and
a transmission module, configured to perform data transmission with the network according to the time sequence of the HARQ process that is determined by the processing module.

According to this solution, in a case in which a processing delay of a network becomes short, a time sequence of an HARQ process may be reset according to the short processing delay of the network, the whole HARQ process becomes compact in time, and therefore, an RTT is effectively shortened.

With reference to the sixth aspect, in a first possible implementation manner,
the processing delay of the network includes:
a delay of the network in reception processing of uplink data or uplink signaling, and a delay of the network in performing downlink data packet assembly, retransmitted downlink data packet assembly, or uplink signaling packet assembly.

With reference to the first possible implementation manner of the sixth aspect, in a second possible implementation manner,
the time sequence of the HARQ process includes a third time interval between each uplink subframe for transmitting uplink data and each downlink subframe for transmitting a PHICH and corresponding to the uplink subframe; where
each third time interval is set according to a first time interval between a corresponding uplink subframe for transmitting uplink data and a downlink subframe for transmitting DCI and corresponding to the uplink subframe, and satisfies: the third time interval is not less than a sum of a delay in transmission of the uplink data, a delay of the network in reception processing of the received uplink data, and a delay of the network in performing PHICH data packet assembly; and
the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay of the UE in reception processing of the DCI used for uplink scheduling, and a delay of the UE in performing uplink data packet assembly.

With reference to the sixth aspect, the first possible implementation manner of the sixth aspect, or the second possible implementation manner of the sixth aspect, in a third possible implementation manner of the sixth aspect,
in a radio frame, a downlink-to-uplink switch-point periodicity is not greater than one half of a length of the radio frame.

With reference to the sixth aspect, the first possible implementation manner of the sixth aspect, the second possible implementation manner of the sixth aspect, or the third possible implementation manner of the sixth aspect, in a fourth possible implementation manner of the sixth aspect,
the processing module is further configured to determine, before the transmission module performs data transmission with the network, a transmission time interval TTI for performing data transmission with the network; and
the transmission module is specifically configured to perform data transmission with the network by using the TTI determined by the processing module; where
the TTI is shorter than 1 ms.

According to a seventh aspect, an embodiment of the present invention provides a method for data transmission in a Time Division Duplex TDD system, where the method includes:
determining, according to a processing delay of user equipment UE, a time sequence of a hybrid automatic repeat request HARQ process for performing data transmission with the UE; and
performing data transmission with the UE according to the determined time sequence of the HARQ process.

According to this solution, in a case in which a device processing delay of UE becomes short, a time sequence of an HARQ process may be reset according to the short processing delay of the UE, the whole HARQ process becomes compact in time, and therefore, an RTT is effectively shortened.

With reference to the seventh aspect, in a first possible implementation manner,
the processing delay of the UE includes: a delay of the UE in reception processing of downlink data or downlink signaling, and a delay of the UE in performing uplink data packet assembly, retransmitted uplink data packet assembly, or uplink signaling packet assembly.

With reference to the first possible implementation manner of the seventh aspect, in a second possible implementation manner,
the time sequence of the HARQ process includes one or more of the following time sequences:
a first time interval between each downlink subframe for transmitting downlink control information DCI used for uplink scheduling and an uplink subframe for transmitting uplink data and corresponding to the downlink subframe;
a second time interval between each downlink subframe for transmitting a physical hybrid automatic repeat indicator channel PHICH and an uplink subframe for transmitting retransmitted uplink data and corresponding to the downlink subframe; or
a fourth time interval between each downlink subframe for transmitting downlink data and each uplink subframe for transmitting an uplink feedback and corresponding to the downlink subframe; where
the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay of the UE in reception processing of the DCI used for uplink scheduling, and a delay of the UE in performing uplink data packet assembly;
the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, where n2 and Q are positive integers, and a TTI multiplied by Q is a sum of a delay in transmission of the PHICH, a delay of the UE in reception processing of the PHICH, and a delay of the UE in performing retransmitted uplink data packet assembly; and
the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, where n4 and W are positive integers, and a TTI multiplied by W is a sum of a delay in transmission of the downlink data, a delay of the UE in reception processing of the downlink data, and a delay of the UE in performing uplink feedback packet assembly.

With reference to the seventh aspect, the first possible implementation manner of the seventh aspect, or the second possible implementation manner of the seventh aspect, in a third possible implementation manner of the seventh aspect,
in a radio frame, a downlink-to-uplink switch-point periodicity is not greater than one half of a length of the radio frame.

With reference to the seventh aspect, the first possible implementation manner of the seventh aspect, the second possible implementation manner of the seventh aspect, or the third possible implementation manner of the seventh aspect, in a fourth possible implementation manner of the seventh aspect,
before the performing data transmission with the UE, the method further includes: determining a transmission time interval TTI for performing data transmission with the UE; and
the performing data transmission with the UE includes: performing data transmission with the UE by using the determined TTI; where
the TTI is shorter than 1 ms.

According to an eighth aspect, an embodiment of the present invention provides a method for data transmission in a Time Division Duplex TDD system, where the method includes:
determining, according to a processing delay of a network, a time sequence of a hybrid automatic repeat request HARQ process for performing data transmission with the network; and
performing data transmission with the network according to the determined time sequence of the HARQ process.

According to this solution, in a case in which a processing delay of a network becomes short, a time sequence of an HARQ process may be reset according to the short processing delay of the network, the whole HARQ process becomes compact in time, and therefore, an RTT is effectively shortened.

With reference to the eighth aspect, in a first possible implementation manner,
the processing delay of the network includes:
a delay of the network in reception processing of uplink data or uplink signaling, and a delay of the network in performing downlink data packet assembly, retransmitted downlink data packet assembly, or uplink signaling packet assembly.

With reference to the first possible implementation manner of the eighth aspect, in a second possible implementation manner,
the time sequence of the HARQ process includes a third time interval between each uplink subframe for transmitting uplink data and each downlink subframe for transmitting a PHICH and corresponding to the uplink subframe; where
each third time interval is set according to a first time interval between a corresponding uplink subframe for transmitting uplink data and a downlink subframe for transmitting DCI and corresponding to the uplink subframe, and satisfies: the third time interval is not less than a sum of a delay in transmission of the uplink data, a delay of the network in reception processing of the received uplink data, and a delay of the network in performing PHICH data packet assembly; and
the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay of the UE in reception processing of the DCI used for uplink scheduling, and a delay of the UE in performing uplink data packet assembly.

With reference to the eighth aspect, the first possible implementation manner of the eighth aspect, or the second possible implementation manner of the eighth aspect, in a third possible implementation manner of the eighth aspect,
in a radio frame, a downlink-to-uplink switch-point periodicity is not greater than one half of a length of the radio frame.

With reference to the eighth aspect, the first possible implementation manner of the eighth aspect, the second possible implementation manner of the eighth aspect, or the third possible implementation manner of the eighth aspect, in a fourth possible implementation manner of the eighth aspect,
before the performing data transmission with the network, the method further includes: determining a transmission time interval TTI for performing data transmission with the network; and
the performing data transmission with the network includes: performing data transmission with the network by using the determined TTI; where
the TTI is shorter than 1 ms.

### BRIEF DESCRIPTION OF DRAWINGS

FIG. 1 is a schematic diagram of a downlink HARQ RTT in a TDD system;
FIG. 2 is a schematic diagram of an uplink HARQ RTT in a TDD system;
FIG. 3 is a schematic structural diagram of a first apparatus for data transmission according to an embodiment of the present invention;
FIG. 4 is a schematic diagram of a TDD configuration in a small coverage scenario when a first apparatus for data transmission according to an embodiment of the present invention is used in a TDD system;
FIG. 5 is a schematic diagram of a TDD configuration in a large coverage scenario when a first apparatus for data transmission according to an embodiment of the present invention is used in a TDD system;
FIG. 6 and FIG. 7 are schematic diagrams of an S subframe configuration in a small coverage scenario when a first apparatus for data transmission according to an embodiment of the present invention is used in a TDD system;
FIG. 8 is a schematic diagram of an S subframe configuration in a large coverage scenario when a first apparatus for data transmission according to an embodiment of the present invention is used in a TDD system;
FIG. 9 is a schematic diagram of a physical channel configuration when the S subframe configuration shown in FIG. 8 is used in a large coverage scenario when a first apparatus for data transmission according to an embodiment of the present invention is used in a TDD system;
FIG. 10 is a schematic structural diagram of a radio frame in a flexible subframe configuration mode when a first apparatus for data transmission according to an embodiment of the present invention is used in a TDD system;
FIG. 11 is a schematic structural diagram of a radio frame in a flexible subframe configuration mode when a first apparatus for data transmission according to an embodiment of the present invention is used in a TDD system;
FIG. 12 is a schematic diagram of a flexible subframe configuration mode in a large coverage scenario when a first apparatus for data transmission according to an embodiment of the present invention is used in a TDD system;
FIG. 13 is a schematic structural diagram of a radio frame when a flexible subframe configuration mode is used in a large coverage scenario when a first apparatus for data transmission according to an embodiment of the present invention is used in a TDD system;
FIG. 14 is a schematic diagram of a physical channel configuration when a radio frame structure shown in FIG. 11 is used in a TDD system;
FIG. 15 is a schematic structural diagram of a radio frame when a first apparatus for data transmission according to an embodiment of the present invention is used in a TDD system;
FIG. 16 is a schematic structural diagram of a radio frame when a first apparatus for data transmission according to an embodiment of the present invention is used in a TDD system;
FIG. 17 is a schematic diagram of a physical channel configuration when a radio frame structure shown in FIG. 16 is used in a TDD system;
FIG. 18 is a schematic structural diagram of a second apparatus for data transmission according to an embodiment of the present invention;
FIG. 19 is a schematic structural diagram of a third apparatus for data transmission according to an embodiment of the present invention;
FIG. 20 is a schematic structural diagram of a fourth apparatus for data transmission according to an embodiment of the present invention;
FIG. 21 is a flowchart of a first method for data transmission according to an embodiment of the present invention;
FIG. 22 is a flowchart of a second method for data transmission according to an embodiment of the present invention;
FIG. 23 is a schematic structural diagram of a fifth apparatus for data transmission according to an embodiment of the present invention;
FIG. 24 is a schematic diagram of a downlink HARQ RTT when a fifth apparatus for data transmission according to an embodiment of the present invention is used in a TDD system;
FIG. 25 is a schematic structural diagram of a sixth apparatus for data transmission according to an embodiment of the present invention;
FIG. 26 is a schematic structural diagram of a seventh apparatus for data transmission according to an embodiment of the present invention;
FIG. 27 is a schematic diagram of an uplink HARQ RTT when a seventh apparatus for data transmission according to an embodiment of the present invention is used in a TDD system;
FIG. 28 is a schematic structural diagram of an eighth apparatus for data transmission according to an embodiment of the present invention;
FIG. 29 is a flowchart of a third method for data transmission according to an embodiment of the present invention; and
FIG. 30 is a flowchart of a fourth method for data transmission according to an embodiment of the present invention.

### DESCRIPTION OF EMBODIMENTS

Embodiments of the present invention provide an apparatus and a method for data transmission, which are used to effectively reduce an RTT and improve data transmission efficiency.

In a first apparatus for data transmission according to an embodiment of the present invention, a transmission time interval (Transmission Time Interval, TTI) of 1 ms in an existing TDD system is shortened, and the shortened TTI is used for performing data transmission. Because data transmission is performed by using the TTI as a unit in the TDD system, a length of the TTI is reduced, and a minimum unit of data scheduling is shortened. Particularly, a delay in waiting for an available uplink subframe is reduced when UE transmits uplink data, and/or a delay in waiting for an available downlink subframe is reduced when a base station transmits downlink data, and therefore, an RTT in the TDD system is reduced.

In a fifth apparatus for data transmission according to an embodiment of the present invention, a time sequence of an HARQ process is set according to a processing delay of user equipment (User Euipment, UE). When the processing delay of the UE becomes short, if the original time sequence of the HARQ process is still used, an RTT cannot be shortened effectively (because the UE still transmits uplink data or an uplink feedback at a later time that is originally specified, regardless of how short the device processing delay of the UE is). By using the apparatus, in a case in which the processing delay of the UE becomes short, the time sequence of the HARQ process may be reset according to the short processing delay of the UE (for example, an original setting is that an uplink feedback is performed in a subframe n+4; after the apparatus and method provided by the embodiment of the present invention are used, according to the short processing delay of the UE, the setting may be that an uplink feedback is performed in a subframe n+3). Therefore, the whole HARQ process becomes compact in time, and the RTT is effectively shortened.

A seventh apparatus for data transmission according to an embodiment of the present invention is similar to the fifth apparatus for data transmission, and their difference lies in that a time sequence of an HARQ process is set according to a processing delay of a network, which can also effectively shorten an RTT.

Before the embodiments of the present invention are described in detail, first, several concepts used in the embodiments of the present invention are described: TTI, TDD configuration (Uplink-downlink configuration), and special subframe (S subframe) configuration (Special subframe configuration).

### TTI

Generally, in a wireless communications system, data scheduling is performed by using a TTI as a unit. When a plurality of user equipments (User Equipment, UE) shares a channel, a scheduler (scheduler) of a network device (for example, a base station or a base station controller) decides, in each TTI according to channel quality of the UEs, which UEs are scheduled, and how many resources (such as power and codes) are allocated to the UEs.

In an existing time division duplex long term evolution (Time Division Duplexing Long Term Evolution, TDD LTE) system, both a PDSCH and a PUSCH are shared channels, and a TTI is defined as 1 ms. For the UEs that share a channel, a TTI of 1 ms is used as a minimum scheduling unit for scheduling, that is, a network performs UE scheduling once every 1 ms.

If the TTI can be shortened, so that a scheduling interval at which the network schedules the UEs is shortened, the RTT can be effectively shortened. A first apparatus for data transmission according to an embodiment of the present invention is provided based on the inventive conception.

For the existing TDD-LTE system, because a length of a subframe is 1 ms, and the TTI is also 1 ms, but during scheduling, scheduling of one subframe cannot be implemented for a plurality of times, if the TTI needs to be shortened, the length of the subframe needs to be shortened first.

Optionally, the TTI may be equal to the length of the subframe, or an integer multiple of the length of the subframe. To shorten the RTT in comparison with the existing TDD LTE system, the TTI needs to be less than the length of the existing TTI (for example, 1 ms for the existing TDD LTE system).

In addition, after the TTI is shortened, a channel configuration of a radio frame also needs to be adaptively changed. Therefore, the embodiments of the present invention further provide channel configurations of various radio frames after the TTI is shortened, to facilitate implementation of the present invention by persons skilled in the art.

### TDD Configuration

In the embodiments of the present invention, the TDD LTE system is used as an example for description. However, it does not mean that the embodiments of the present invention are applicable to only the TDD LTE system. Actually, any TDD system in which the RTT needs to be shortened may use the solutions provided by the embodiments of the present invention.

In the TDD LTE system, the TDD configuration is a very important concept. Various channel configurations are all implemented in a specific TDD configuration. Therefore, before the embodiments of the present invention are described, a case of the TDD configuration in the existing TDD LTE system is first described.

Table 1 is a TDD configuration table in the existing TDD LTE system. As shown in Table 1, there are seven TDD configurations in total: 0-6, in the existing TDD LTE system. In the table, "D" represents a downlink subframe, "S" represents a special subframe (S subframe), "U" represents an uplink subframe (in the following description, meanings of "S", "D", and "U" are the same as those defined herein, and are not further explained). In Table 1, a downlink-to-uplink switch-point periodicity (Downlink-to-Uplink Switch-point periodicity) in TDD configurations 0, 1,2, and 6 is 5 ms, and a downlink-to-uplink switch-point periodicity in TDD configurations 3-5 is 10 ms.

**Table 1**

| **TDD configuration** | **Downlink-to-uplink switch-point periodicity** | **Subframe number** | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

### S Subframe Configuration

S subframe configurations are various configurations of an S subframe. Table 2 is an S subframe configuration table when a normal cyclic prefix (Normal Cyclic Prefix, CP) is used in a downlink direction in the existing TDD LTE system. As shown in FIG. 2, when a normal CP is used in the downlink direction, there are nine different S subframe configurations in total, namely, 0-8. For different S subframe configurations, a length of a downlink pilot timeslot (Downlink Pilot Time Slot, DwPTS) and a length of an uplink pilot timeslot (Uplink Pilot Time Slot, UpPTS) are different. In Table 2, Ts is a sampling interval in a fast Fourier transform of an OFDM symbol in the TDD LTE system, and is equal to 1/(15000*2048)s.

**Table 2**

| **S subframe configuration** | **Normal CP used in downlink** | | |
|---|---|---|---|
| | DwPTS | UpPTS | |
| | | Normal CP used in uplink | Extended CP used in uplink |
| 0 | 6592 Ts | 2192 Ts | 2560 Ts |
| 1 | 19760 Ts | | |
| 2 | 21952 Ts | | |
| 3 | 24144 Ts | | |
| 4 | 26336 Ts | | |
| 5 | 6592 Ts | 4384 Ts | 5120 Ts |
| 6 | 19760 Ts | | |
| 7 | 21952 Ts | | |
| 8 | 24144 Ts | | |

The embodiments of the present invention are hereinafter described with reference to accompanying drawings.

First, a first apparatus for data transmission according to an embodiment of the present invention is described, where the apparatus may be a network device in a TDD system.

FIG. 3 is a schematic structural diagram of a first apparatus for data transmission according to an embodiment of the present invention. As shown in FIG. 3, the apparatus includes:
a processing module 301, configured to determine a TTI for performing data transmission with UE; and
a transmission module 302, configured to perform data transmission with the UE by using the TTI determined by the processing module 301; where
the TTI is shorter than 1 ms.

Optionally, in a TDD system, a length of a radio frame is not changed and is still 10 ms. A length of a subframe is reduced to 1/n of an original length, where n>1 and is optionally an integer. n=2 is used as an example. The length of the subframe is 0.5 ms. A length of the TTI is equal to the length of the subframe and is 0.5 ms. A length of a symbol is the same as that in the existing TDD LTE system.

There may be a plurality of TDD configuration modes when n=2. The following describes three of the TDD configuration modes by using an example. Because there may be a plurality of TDD configuration modes, the TDD configuration modes cannot be illustrated one by one. After referring to the three modes illustrated in the embodiment of the present invention, persons skilled in the art may make variations and modifications to the three modes based on a specific application scenario according to an inventive conception of the embodiment of the present invention, that is, shortening the length of the TTI. However, because the modifications are based on the same inventive conception of the embodiment of the present invention, the modifications or variations shall also fall within the scope of protection defined by the claims of the present invention.

The three specific TDD configuration modes provided by the embodiment of the present invention are hereinafter described one by one.

Mode 1: A downlink-to-uplink switch-point periodicity is not changed.

A TDD configuration mode in mode 1 is shown in the following Table 3.

**Table 3**

| **TDD configuration** | **Downlink-to-uplink switch-point periodicity** | **Subframe number** | | | | | | | | | | | | | | | | | | | |
|---|---|---|---|---|---|---|---|---|---|---|---|---|---|---|---|---|---|---|---|---|---|
| | | 0 | 1 | 2 | 3 | 4 | 5 | 6 | 7 | 8 | 9 | 10 | 11 | 12 | 13 | 14 | 15 | 16 | 17 | 18 | 19 |
| 7 | 5 ms | D | D | S | S | U | U | U | U | U | U | D | D | S | S | U | U | U | U | U | U |
| 8 | 5 ms | D | D | S | S | U | U | U | U | D | D | D | D | S | S | U | U | U | U | D | D |
| 9 | 5 ms | D | D | S | S | U | U | D | D | D | D | D | D | S | S | U | U | D | D | D | D |
| 10 | 10 ms | D | D | S | S | U | U | U | U | U | U | D | D | D | D | D | D | D | D | D | D |
| 11 | 10 ms | D | D | S | S | U | U | U | U | D | D | D | D | D | D | D | D | D | D | D | D |
| 12 | 10 ms | D | D | S | S | U | U | D | D | D | D | D | D | D | D | D | D | D | D | D | D |
| 13 | 5 ms | D | D | S | S | U | U | U | U | U | U | D | D | S | S | U | U | U | U | U | U |

In the present invention, a numbering manner same as that in the existing TDD system is used for subframe numbering, that is, in a radio frame, subframes are numbered starting from 0, a first subframe in a radio frame is a subframe 0, a second subframe is a subframe 1, and so on, which is not further explained hereinafter.

In comparison with the TDD configuration in the existing TDD LTE system in Table 1, as shown in Table 3, the downlink-to-uplink switch-point periodicity is not changed, and in Table 3, one original subframe is changed into two consecutive same subframes.

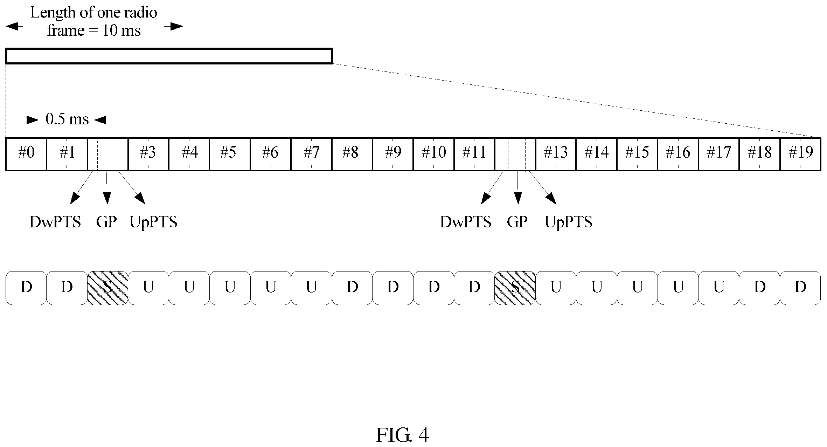

In actual implementation, considering different coverage scenarios, lengths of S subframes in Table 3 may be changed. For example, for a small coverage scenario (that is, a cell coverage radius is not greater than a preset coverage radius threshold), only a subframe 2 may be set as an S subframe, and a subframe 3 is set as an uplink subframe. For the TDD configuration 8 in Table 3, a modified TDD configuration in the small coverage scenario may be shown in FIG. 4. In a radio frame of 10 ms, a subframe 2 and a subframe 12 are S subframes, and a subframe 3 and a subframe 13 are changed into uplink subframes.

In FIG. 4, an S subframe includes three parts: a downlink pilot timeslot (Downlink Pilot Time Slot, DwPTS), a guard period (Guard Period, GP), and an uplink pilot timeslot (Uplink Pilot Time Slot, UpPTS).

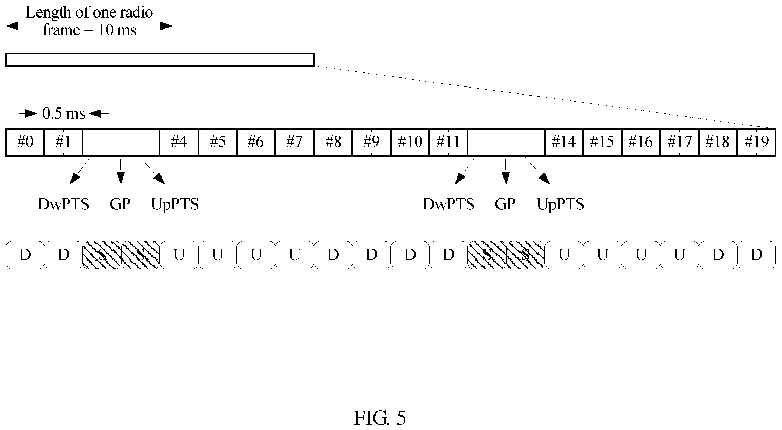

For a large coverage scenario (that is, a cell coverage radius is greater than a preset coverage radius threshold), because a long GP is required, in this case, an S subframe may need to occupy a plurality of consecutive subframes, for example, a configuration mode in Table 3 may be used, where an S subframe occupies two consecutive subframes. Likewise, for the TDD configuration 8 in Table 3, for a schematic diagram of the TDD configuration, reference may be made to FIG. 5.

It can be seen from the foregoing two TDD configurations in FIG. 5 that, for the large coverage scenario, an S subframe includes M consecutive subframes. In addition, to ensure cell coverage, a length of the GP in the S subframe needs to be determined according to a cell coverage radius, where M is an integer that is greater than 1.

Specifically, for the first apparatus for data transmission according to the embodiment of the present invention, the processing module 301 is further configured to determine a TDD configuration and an S subframe configuration of a radio frame.

Likewise, for mode 2 and mode 3 of the TDD configuration, the processing module 301 may also determine a TDD configuration and an S subframe configuration of a radio frame.

Further, when a cell coverage radius is greater than a preset coverage radius threshold, the processing module 301 determines that an S subframe in the radio frame includes M consecutive subframes, and determines a length of a guard period GP in the S subframe according to the cell coverage radius; where M is a positive integer that is greater than 1.

Likewise, for mode 2 and mode 3 of the TDD configuration, the processing module 301 may also determine, according to a cell coverage radius, a quantity of subframes included in an S subframe, and determines a length of a GP according to the cell coverage radius.

Optionally, when the S subframe configuration is determined, different configuration modes may also be used according to different coverage scenarios.

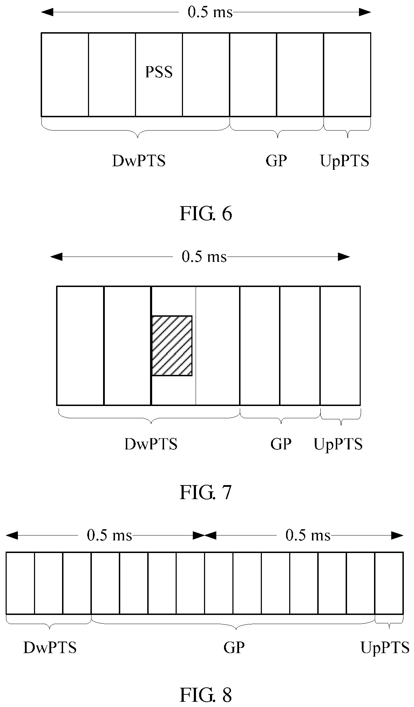

For example, for the small coverage scenario, an optional S subframe configuration mode may be shown in FIG. 6 and FIG. 7. FIG. 6 shows a configuration of an S subframe in time, and FIG. 7 shows a frequency domain position of the S subframe.

As shown in FIG. 6, in the S subframe, a third symbol carries a primary synchronization signal (Primary Synchronization Symbol, PSS), and first 1-2 symbols are a physical layer control channel, and similar to those in the existing TDD LTE system, may carry a physical downlink control channel (Physical Downlink Control Channel, PDCCH), a physical control format indicator channel (Physical Control Format Indicator Channel, PCIFICH), or a physical hybrid automatic repeat indicator channel (Physical Hybrid Automatic Repeat-reQuest, Indicator Channel, PHICH). A last symbol in the S subframe is an UpPTS, which may include a sounding reference signal (Sounding Reference Signal, SRS) used for performing a measurement on an uplink. As described above, the length of the GP is decided by the cell coverage radius. A range of symbols of the GP is between the third symbol and the last symbol, and the remaining part is a physical downlink shared channel (Physical Downlink Shared Channel, PDSCH).

It should be noted that, FIG. 6 shows only a possible S subframe configuration. Similar to the existing TDD LTE system, a corresponding S subframe configuration may be used according to different implementation scenarios. For different S subframe configurations, as shown in Table 2, the DwPTS and UpPTS may also have different lengths.

As shown in FIG. 7, the frequency domain position of the PSS (the part filled with slashes) in the S subframe is located in the middle of a system bandwidth, for example, may be configured in 72 middle subcarriers in the system bandwidth, same as that in the existing TDD LTE system.

For the large coverage scenario, in a case in which the S subframe occupies two consecutive subframes, an S subframe configuration may be shown in FIG. 8. A first half part of the first subframe includes a DwPTS (including a PSS) and a GP, and a last subframe includes the GP and an UpPTS.

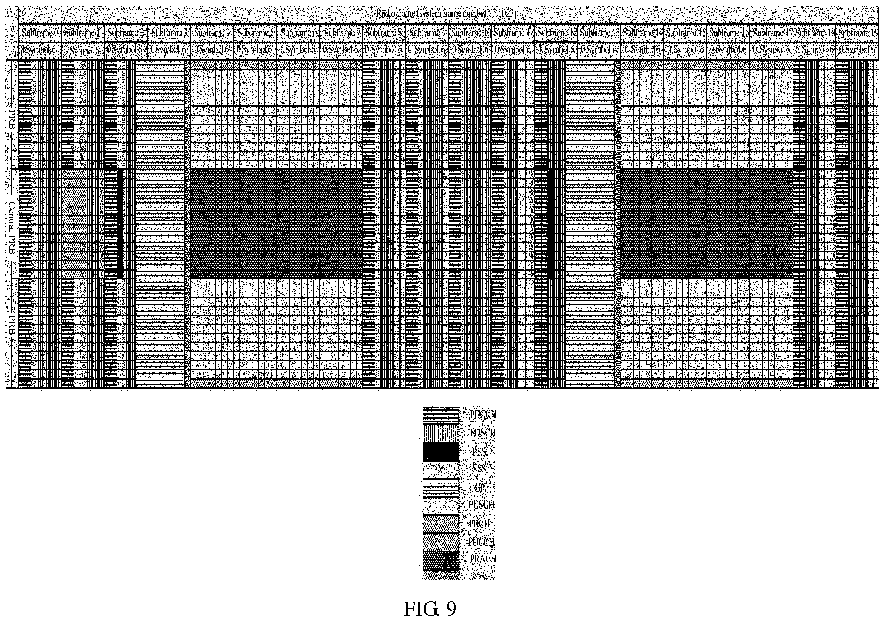

For the large coverage scenario, the S subframe configuration shown in FIG. 8 is used, and a possible physical channel configuration is shown in FIG. 9. In FIG. 9, an SSS is a secondary synchronization signal (secondary synchronization signal), a PUSCH is a physical uplink shared channel (Physical Uplink Shared Channel), a PBCH is a physical broadcast channel (Physical Broadcast Channel), a PUCCH is a physical uplink control channel (Physical Uplink Control Channel), a PRACH is a physical random access channel (Physical Random Access Channel), an SRS signal, and a PCCH is a paging control channel (Paging Control Channel) (the PCCH may be configured in subframes 0, 2, 10, and 12).

In the physical channel configuration solution shown in FIG. 9, for better compatibility with the existing system, corresponding synchronization channels (the SSS and the PSS) and the broadcast channel (PBCH) are reserved in original positions.

In FIG. 9, because the PBCH occupies some resources on first two symbols in a subframe 1, on the first two symbols, a frequency division mode is used for the PBCH and PDCCH, that is, different frequency sub-bands are occupied. Optionally, a time division mode may be further used for the PBCH and the PDCCH. When the time division mode is used, the PDCCH is not transmitted on the first two symbols in the subframe 1.

Therefore, in the first apparatus for data transmission according to the embodiment of the present invention, the processing module 301 is further configured to determine, when the broadcast channel occupies the first two symbols in the subframe 1, to skip transmitting the PDCCH on the first two symbols in the subframe 1.

Likewise, for mode 2 and mode 3 of the TDD configuration, the processing module 301 also determines a multiplexing mode of the PBCH and the PDCCH when the broadcast channel occupies the first two symbols in the subframe 1, and when the time division mode is used, may also determine to skip transmitting the PDCCH on the first two symbols in the subframe 1.

In addition, in comparison with the existing TDD LTE system, because a sequence relationship of subframes is changed, an HARQ time sequence also needs to be correspondingly changed to implement:
1. after the UE receives a format of downlink (DownLink, DL) DCI, the UE determines when to perform uplink data transmission;
2. after the UE receives the PHICH, the UE determines when to perform uplink (UpLink, UL) data retransmission;
3. after the UE transmits UL data, the UE determines when to receive a DL acknowledgement (ACKnowledgement, ACK) or a negative acknowledgement (Negative aCKnowledgement, NCK); and
4. after the UE receives DL data, the UE determines when to perform a UL ACK/NCK feedback.

Therefore, optionally, in the first apparatus for data transmission according to the embodiment of the present invention, the processing module 301 is further configured to determine a time sequence of an HARQ process for performing data transmission with the UE by the transmission module 302; and the transmission module 302 is specifically configured to perform data transmission with the UE by using the time sequence of the HARQ process that is determined by the processing module 301.

If a delay (namely, a sum of a transmission delay and a processing delay of a device (the UE or a network, for example, a base station)) is four TTIs (it indicates that in the HARQ time sequence, at least four TTIs are required from transmission of data or an indication at a transmit end to completion of processing at a receive end, where an uplink delay and a downlink delay are considered to be the same), the HARQ time sequence in mode 1 in the embodiment of the present invention includes:
1. A first time interval between transmitting, by the network, DCI used for uplink scheduling and performing UL data transmission by the UE

The first time interval is a TTI multiplied by n1, and n1 is a positive integer.

If n1=4, that is, a sum of a delay of the network in transmitting the DCI used for uplink scheduling and a delay of the UE in processing the DCI is a TTI multiplied by 4, after the UE receives the DCI, the UE delays for four TTIs, and finds a first UL subframe to perform UL data transmission, while ensuring a minimum offset corresponding to a DL subframe with a longest time interval between a UL subframe for transmitting the UL data and a corresponding DL subframe for receiving the DCI.

For the TDD configuration shown in Table 3 in mode 1, reference may be made to the following Table 4 for the definition of the HARQ time sequence. The following uses a TDD configuration 10 in Table 4 as an example for description. In Table 4, a subframe marked with slashes is a DL subframe, a subframe marked with transverse lines is an S subframe, and a subframe that is not marked with lines is an uplink subframe. When the S subframe includes two consecutive subframes, a second subframe cannot be used for transmitting an uplink signal or data except an SRS signal, and the second subframe also cannot be used for transmitting a downlink signal or data. Representation methods for a DL subframe, a UL subframe, and an S subframe in the following Table 5 to Table 7, and Table 9 are the same as those in Table 4, and are not further explained. Numbers marked in Table 4 are n1, and for a scenario in which the delay is four TTIs, n1 is not less than 4.

For a TDD configuration 10 in Table 4, because a DL subframe that is more than four TTIs away from a subframe 9 is a subframe 3, only a TTI multiplied by 7 can be selected for a UL offset, that is, n1=7; in addition, because a quantity of DL subframes is greater than or equal to a quantity of UL subframes, scheduling of the DCI can be ensured. Each DL subframe schedules one UL subframe, and scheduling is delayed in sequence. Therefore, UL offsets corresponding to subframes 0, 1, 2, 3, 18, and 19 are all TTIs multiplied by 7.

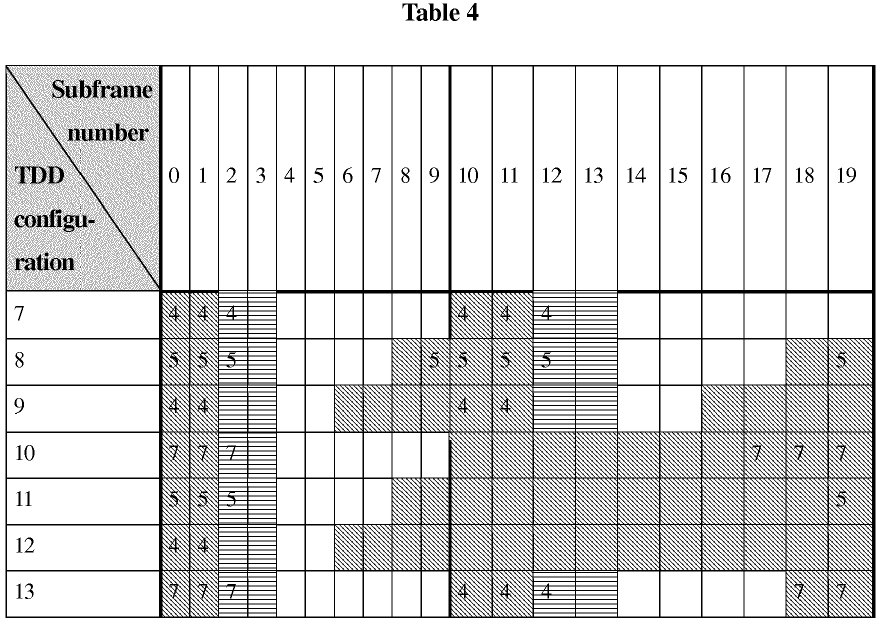

When the quantity of DL subframes is less than the quantity of UL subframes, for example, for the TDD configurations 7, 8, and 13 in Table 4, two UL grants (UL grant) need to be transmitted in a DL subframe simultaneously. Therefore, it is ensured that DL scheduling is performed in each UL subframe.

In summary, after the UE receives the format of the DCI used for scheduling, the HARQ time sequence for performing UL data transmission should satisfy:
a first time interval between each DL subframe for transmitting DCI used for uplink scheduling and a UL subframe for transmitting UL data and corresponding to the DL subframe, where the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where N is a positive integer, and a TTI multiplied by N is a sum of a delay in transmission of the DCI used for uplink scheduling, a delay in reception processing of the DCI used for uplink scheduling, and a delay in uplink data packet assembly.

For Table 4, N=4. It should be noted that, N is set in two manners:
Manner 1: According to a cell coverage radius in the network and a processing delay of the UE that currently communicates with the apparatus for data transmission according to the embodiment of the present invention (the HARQ time sequence includes the delay of the UE in reception processing of the DCI used for uplink scheduling and the delay of the UE in performing uplink data packet assembly), only the processing delay of the UE is considered.
Manner 2: N is determined according to a cell coverage radius in the network and processing delays of all UEs in the network. The setting of N should satisfy that all UEs in the network have enough time to process the DCI used for uplink scheduling and perform uplink data packet assembly. In this case, N is set according to the processing delays of all UEs in the network.

2. A second time interval between transmitting a PHICH by the network and performing UL data retransmission by the UE according to the PHICH

The second time interval is a TTI multiplied by n2, and n2 is a positive integer.

The second time interval should satisfy:
n2 is not less than Q, and a second time interval that corresponds to an uplink subframe for transmitting retransmitted UL data and having a longest time interval from each downlink subframe for transmitting the PHICH is shortest, where n2 and Q are positive integers, and a TTI multiplied by Q is a sum of a delay in transmission of the PHICH, a delay in reception processing of the PHICH, and a delay in retransmitted uplink data packet assembly.

When Q=4, for the TDD configuration shown in Table 3 in mode 1, reference may be made to the following Table 5 for the definition of the HARQ time sequence, where numbers in Table 5 are n2. Herein, similar to the foregoing HARQ time sequence, two manners may also be considered for setting Q. That is, only the processing delay of the UE that currently performs data transmission is considered, or processing delays of all UEs in the network are considered.

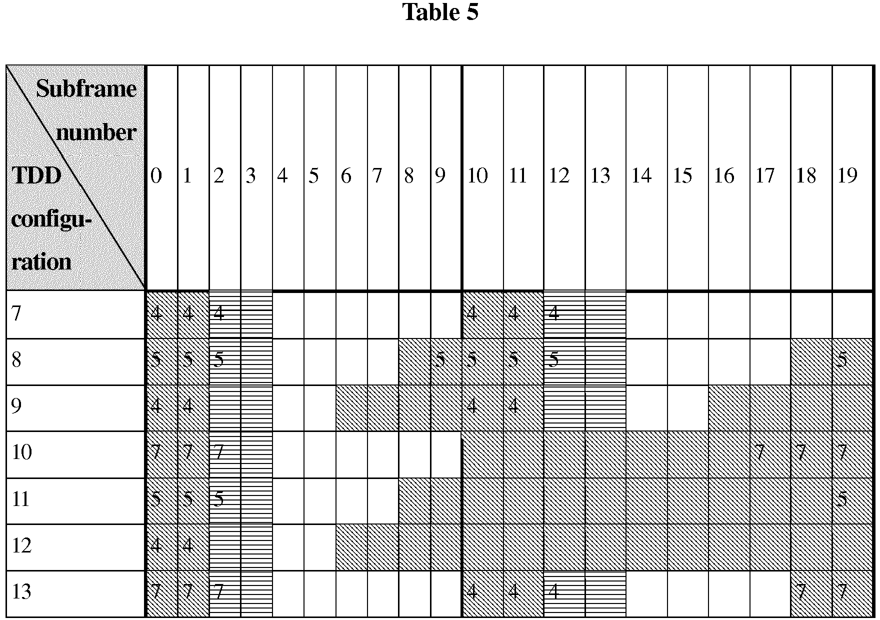

3. A third time interval between each uplink subframe for transmitting UL data and each DL subframe for transmitting a PHICH and corresponding to the uplink subframe (namely, a PHICH feedback time of the UL data)

The third time interval is a TTI multiplied by n3, and n3 is a positive integer.

The third time interval is set according to a first time interval between a corresponding uplink subframe for transmitting UL data and a DL subframe for transmitting DCI used for uplink scheduling and corresponding to the UL subframe, and the third time interval needs to satisfy: it is not less than a sum of a delay in transmission of the uplink data, a delay in reception processing of the uplink data, and a delay in PHICH data packet assembly.

That is, in addition to ensuring that the PHICH feedback does not time out, it needs to be ensured that the DCI and the PHICH are transmitted in a same DL subframe.

For the TDD configuration shown in Table 3 in mode 1, reference may be made to the following Table 6 for the definition of the HARQ time sequence, where numbers in Table 6 are n3.

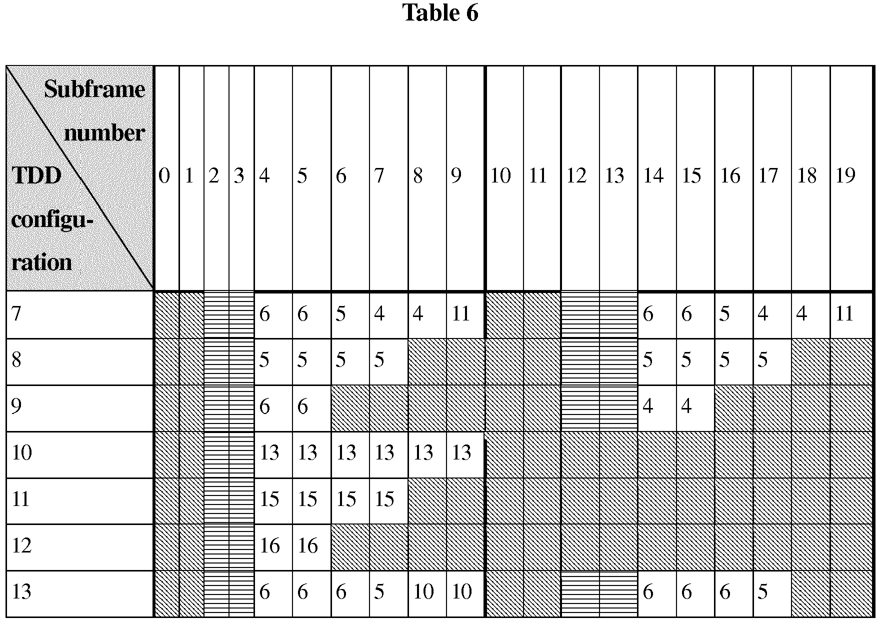

4. A fourth time interval between each downlink subframe for transmitting downlink data and each uplink subframe for transmitting an uplink feedback and corresponding to the downlink subframe (namely, a UL ACK/NCK feedback time of the DL data)

The fourth time interval is a TTI multiplied by n4, and n4 is a positive integer.

The fourth time interval should satisfy:
n4 is not less than W, and a fourth time interval that corresponds to a UL subframe for transmitting a UL feedback and having a longest time interval from each DL subframe for transmitting the DL data is shortest, where n4 and W are positive integers, and a TTI multiplied by W is a sum of a delay in transmission of the downlink data, a delay in reception processing of the downlink data, and a delay in uplink feedback packet assembly.

When W=4, for the TDD configuration shown in Table 3 in mode 1, reference may be made to the following Table 7 for the definition of the HARQ time sequence, where numbers in Table 7 are n4. Herein, one of the two manners for setting the first HARQ time sequence and the second HARQ time sequence may also be used for setting W. That is, only the processing delay of the UE that currently performs data transmission is considered, or processing delays of all UEs in the network are considered.

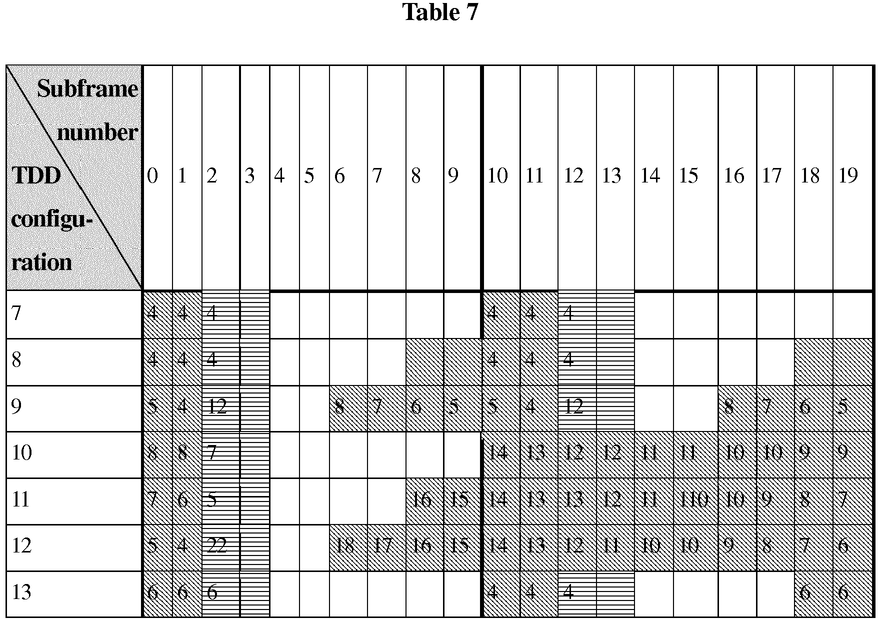

An implementation manner of the HARQ time sequence in the TDD configuration shown in Table 3 in mode 1 is described above. The following analyzes a maximum quantity of DL HARQ processes and a maximum quantity of UL HARQ processes in the HARQ time sequence.

Because only one HARQ is allowed in each TTI, a corresponding maximum quantity of HARQ processes is shown in Table 8. Specific analysis is as follows:

Using a DL as an example, after one piece of DL data is transmitted, the UE transmits a feedback in a UL subframe after n4 TTIs. After n5 TTIs (herein, n5 is a processing delay of the network, and depends on implementation of an algorithm of the network device, where n5 is a positive integer), the network (for example, a base station) selects a DL subframe for performing DL retransmission. Therefore, each newly transmitted DL subframe corresponds to a retransmitted DL subframe, where a maximum quantity of DL subframes included between the newly transmitted DL subframe and the retransmitted DL subframe plus 1 is the maximum quantity of DL HARQ processes in the configuration. For a UL, the case is similar. Specific configurations are shown in Table 8.

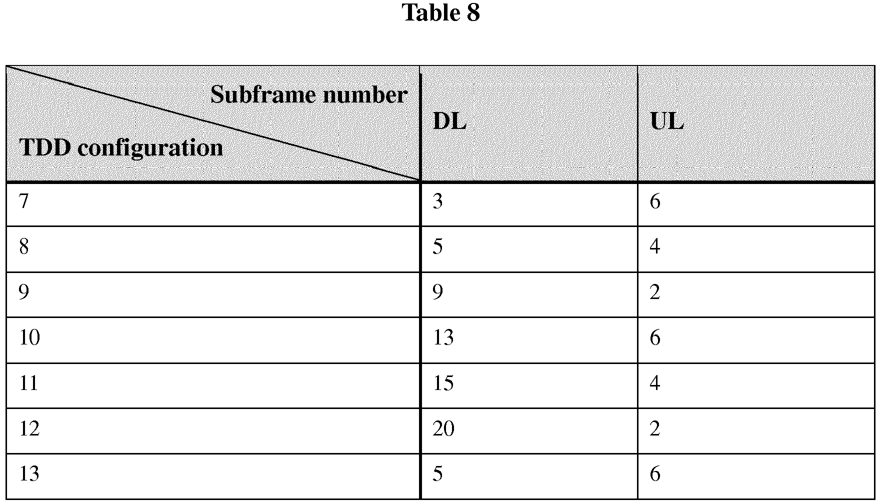

The foregoing describes in detail specific implementation manners of the channel configuration, the S subframe configuration, the HARQ time sequence, and the like in a case in which mode 1 (a downlink-to-uplink switch-point periodicity is not changed) is used in the TDD configuration in the first apparatus for data transmission according to the embodiment of the present invention. The following describes a specific implementation manner in which mode 2 (flexible subframe type configuration) is used in the TDD configuration in the first apparatus for data transmission according to the embodiment of the present invention.

### Mode 2: Flexible subframe type configuration

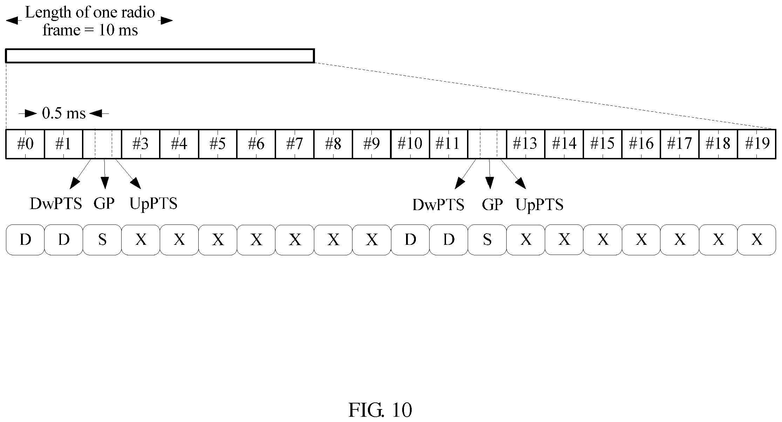

In mode 2, a subframe type may be configured flexibly based on specific system implementation. An optional configuration mode is shown in FIG. 10.

In FIG. 10, a length of a TTI is 0.5 ms, and "X" represents a subframe that may be configured flexibly, and may be specifically configured as a UL subframe, or may be configured as a DL subframe or an S subframe.

One implementation manner is: adding an uplink-to-downlink switch-point by configuring a subframe flexibly, to further reduce an RTT; another implementation manner is: ensuring compatibility (backward compatibility) with the existing system.

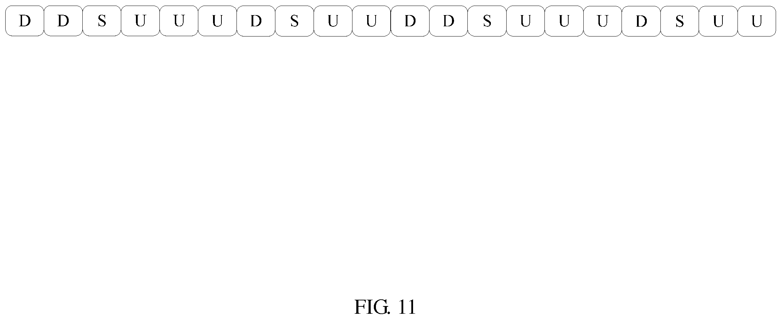

For example, a subframe configuration after a flexible configuration may be shown in FIG. 11. In the configuration shown in FIG. 11, in a radio frame of 10 ms, a group of DL switch-points is added within 5 ms, which reduces a time interval for some subframes to wait for UL/DL switching, and therefore, the RTT of the system is reduced.

Therefore, optionally, in the first apparatus for data transmission according to the embodiment of the present invention, the processing module 301 is specifically configured to determine a subframe type of each subframe in a radio frame, so that the downlink-to-uplink switch-point periodicity is not greater than a half of a length of the radio frame.

Specifically, in comparison with TDD configurations 0, 1, 2, and 6 (referring to Table 1) in existing TDD LTE, by means of the flexible subframe configuration, the downlink-to-uplink switch-point periodicity may be less than 5 ms after the TTI is shortened. In comparison with TDD configurations 3, 4, and 5 in existing TDD LTE, by means of the flexible TDD configuration, the downlink-to-uplink switch-point periodicity may be less than 10 ms or further, not greater than 5 ms after the TTI is shortened.

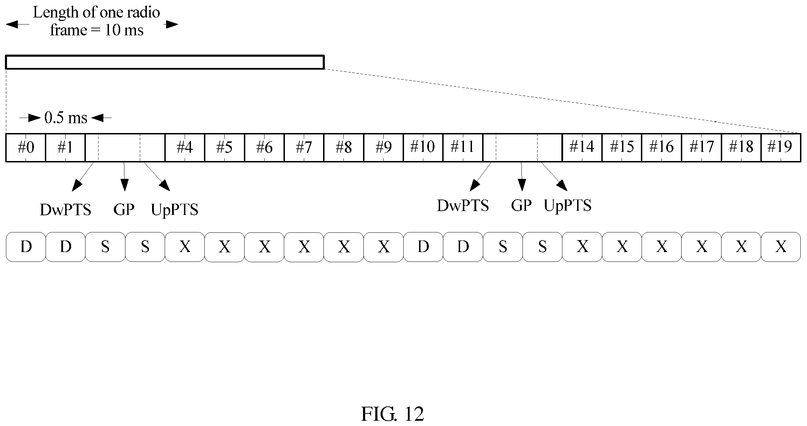

For a large coverage scenario, similar to mode 1, an S subframe may be configured to occupy a plurality of consecutive subframes. A specific configuration mode is shown in FIG. 12. A subframe 2 and a subframe 3 are S subframes, and a subframe 12 and a subframe 13 are S subframes. Same as that in FIG. 10, "X" represents a subframe that may be configured flexibly.

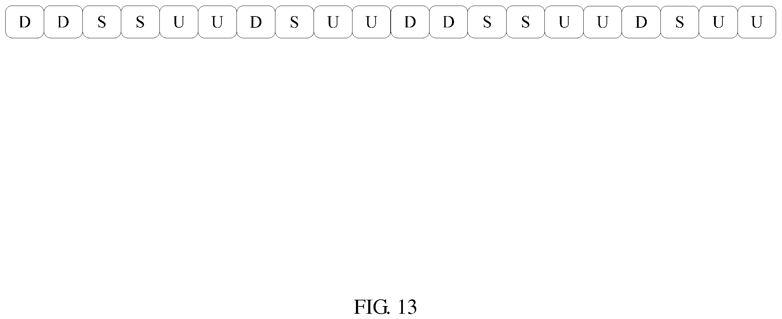

For example, a subframe configuration after a flexible configuration is shown in FIG. 13. As can be seen from FIG. 13, a group of DL switch-points is also added within 5 ms, which reduces a time interval for some subframes to wait for UL/DL switching, and therefore, the RTT is reduced.

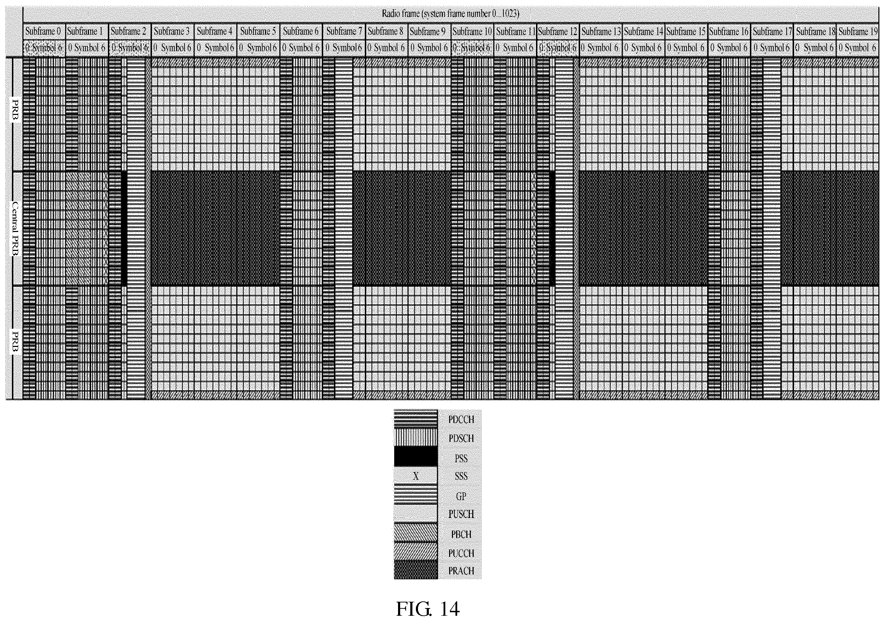

For the TDD configuration shown in FIG. 11, a specific physical channel configuration may be shown in FIG. 14.

As can be seen from FIG. 14, not all S subframes include SRS signals. In FIG. 14, only a subframe 2 and a subframe 12 include SRS signals, and a subframe 7 and a subframe 17 do not include SRS signals. A purpose of the setting is to save more resources for the UE to perform UL data transmission.

Therefore, optionally, in the first apparatus for data transmission according to the embodiment of the present invention, the S subframe configuration includes: when one radio frame includes a plurality of S subframes, some S subframes include SRS signals, and other S subframes do not include SRS signals.

Likewise, for mode 1 and mode 3, the S subframe configuration may also be used. When one radio frame includes a plurality of S subframes, a mode in which some S subframes include SRS signals and other S subframes do not include SRS signals is determined.

For a PRACH channel, in the existing TDD LTE system, the PRACH channel requires a delay of 1 ms. A main purpose of this stipulation is to better ensure a length and power of a transmit code (namely, a preamble Preamble). Certainly, with evolution of technologies, a transmission delay of the PRACH may become shorter, but as long as the transmission delay of the PRACH is greater than a length of a subframe, the PRACH needs to occupy a plurality of uplink subframes.

If the length of the subframe is equal to the length of the TTI and is 0.5 ms in mode 2, the PRACH channel needs to occupy two subframes; for a scenario in which the length of the subframe is shorter, according to the current stipulation on the length of the PRACH, the PRACH channel may occupy more than two subframes. One case is that, to ensure the length of the PRACH, the PRACH channel needs to span a DL subframe and an S subframe. For example, for the channel configuration shown in FIG. 14, the PRACH may occupy a UL subframe 15 and a UL subframe 18, and span a DL subframe 16 and an S subframe 17. Optionally, the PRACH may further occupy last two symbols in the S subframe 17.

Therefore, in the first apparatus for data transmission according to the embodiment of the present invention, the processing module 301 is further configured to determine the length of the PRACH, and if the determined length of the PRACH is greater than the length of the subframe, determine that the PRACH occupies C consecutive uplink subframes, where C is a positive integer.

For mode 1 and mode 3 of the TDD configuration, a case in which the processing module determines, when the determined length of the PRACH is greater than the length of the subframe, that the PRACH occupies C consecutive uplink subframes, may also exist.

Same as mode 1 of the TDD configuration, for mode 2, in the first apparatus for data transmission according to the embodiment of the present invention, the processing module 301 is further configured to determine a time sequence of an HARQ process for performing data transmission with the UE by the transmission module 302; and the transmission module 302 is specifically configured to perform data transmission with the UE by using the time sequence of the HARQ process that is determined by the processing module 301.

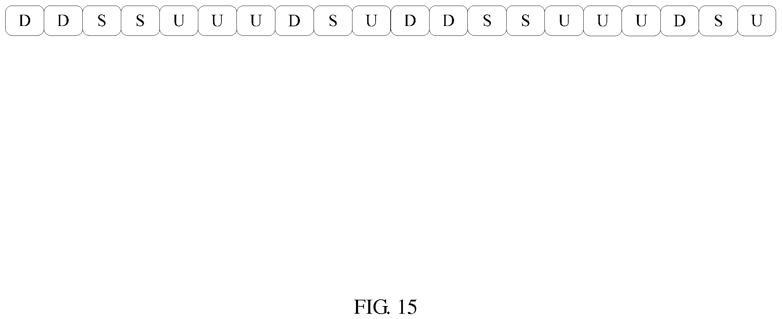

In mode 2, for the TDD configuration in FIG. 15, an HARQ time sequence that may be used is shown in Table 9.

"UL data transmission offset after DCI is received" indicates a quantity of TTIs after which UL data is transmitted after the UE receives DL DCI; "DL feedback" indicates a quantity of TTIs after which a feedback ACK/NCK is transmitted after the UE receives DL data; "UL feedback" indicates a quantity of TTIs after which a feedback ACK/NCK is transmitted after the network (for example, a base station) receives UL data; "UL retransmission after the UE receives a PHICH" indicates a quantity of TTIs after which UL data retransmission is performed after the UE receives the PHICH and the PHICH includes an NCK.

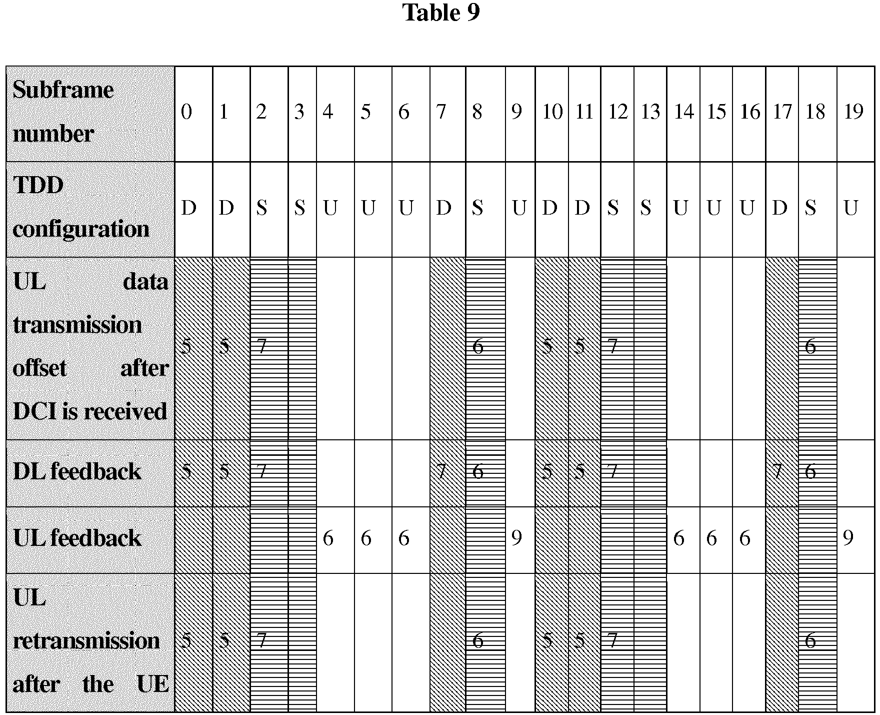

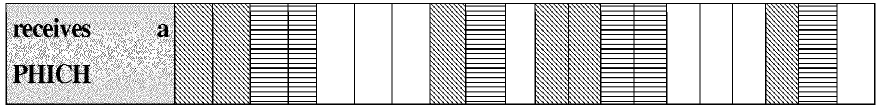

For a principle of the HARQ time sequence shown in Table 9, reference may be made to each HARQ time sequence in mode 1. Although only an HARQ time sequence in mode 2 as shown in Table 9 is illustrated, persons skilled in the art may obtain HARQ time sequences in other TDD configurations with reference to the HARQ time sequence and detailed descriptions about the HARQ time sequence in mode 1. Principles of the HARQ time sequences are the same as the principle of the HARQ time sequence provided in the embodiment of the present invention. All modifications and variations based on the principle shall fall within the scope of protection defined by the claims of the present invention.

The foregoing describes mode 1 (a downlink-to-uplink switch-point periodicity is not changed) and mode 2 (flexible subframe type configuration) of the TDD configuration in the first apparatus for data transmission according to the embodiment of the present invention. The following describes mode 3 (a length of a subframe in the existing TDD system is reduced to 1/K of the original length) of the TDD configuration.

### Mode 3

In mode 3, a length of a subframe in the existing TDD system is directly reduced to 1/K of the original length, where K is a positive integer. This mode is easy to implement.

When K=2, in comparison with the TDD configuration shown in Table 1, the TDD configuration in mode 3 is shown in Table 10.

| **Table 10** | | | | | | | | | | | | | | | | | | | | | |
|---|---|---|---|---|---|---|---|---|---|---|---|---|---|---|---|---|---|---|---|---|---|
| **TDD configuration** | **(Downlink-to-plink switch-point periodicity** | **Subframe number** | | | | | | | | | | | | | | | | | | | |
| | | 0 | 1 | 2 | 3 | 4 | 5 | 6 | 7 | 8 | 9 | 10 | 11 | 12 | 13 | 14 | 15 | 16 | 17 | 18 | 19 |
| 7 | 5 ms | D | S | U | U | U | D | S | U | U | U | D | S | U | U | U | D | S | U | U | U |
| 8 | 5 ms | D | S | U | U | D | D | S | U | U | D | D | S | U | U | D | D | S | U | U | D |
| 9 | 5 ms | D | S | U | D | D | D | S | U | D | D | D | S | U | D | D | D | S | U | D | D |
| 10 | 10 ms | D | S | U | U | U | D | D | D | D | D | D | S | U | U | U | D | D | D | D | D |
| 11 | 10 ms | D | S | U | U | D | D | D | D | D | D | D | S | U | U | D | D | D | D | D | D |
| 12 | 10 ms | D | S | U | D | D | D | D | D | D | D | D | S | U | D | D | D | D | D | D | D |
| 13 | 5 ms | D | S | U | U | U | D | S | U | U | D | D | S | U | U | U | D | S | U | U | D |

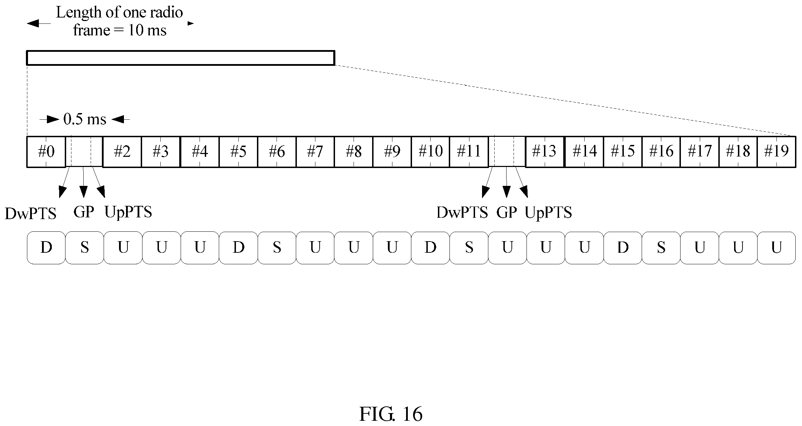

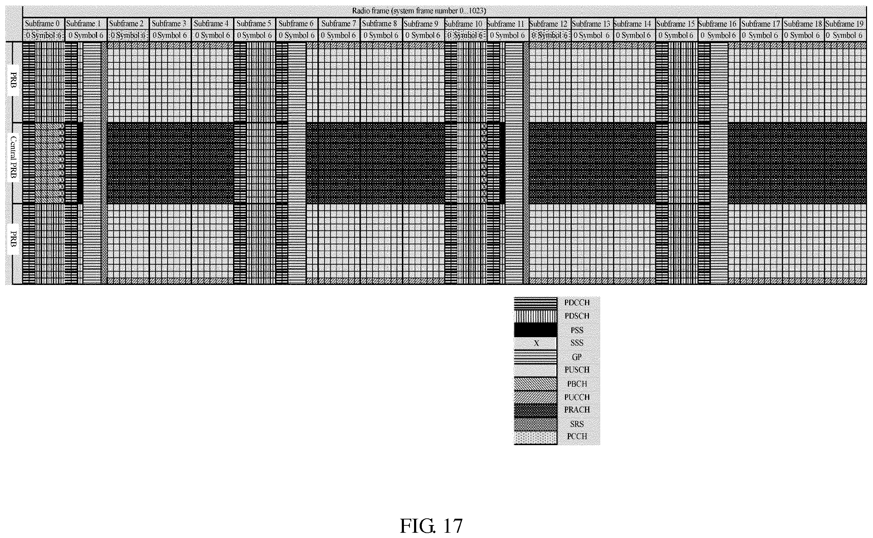

Using a configuration 7 in Table 10 as an example, a radio frame structure is shown in FIG. 16, and a physical channel configuration is shown in FIG. 17.

As shown in FIG. 17, a broadcast channel PBCH occupies a subframe 0. Therefore, in the first apparatus for data transmission according to the embodiment of the present invention, the processing module 301 is further configured to determine that the broadcast channel occupies the subframe 0. The configuration mode is also applicable to mode 1 and mode 2 of the TDD configuration.

Likewise, for mode 3, because the TDD configuration in mode 3 changes in comparison with that in the existing TDD system, correspondingly, before data transmission is performed with the UE, the HARQ time sequence for data transmission should also be determined first. A principle for determining the HARQ time sequence in mode 3 is similar to that in mode 1 and mode 2 of the TDD configuration. Implementation thereof is not further described herein. Reference may be made to mode 1 and mode 2.

For the first apparatus for data transmission according to the embodiment of the present invention, the network and the UE can communicate normally only in a case in which the network and the UE use consistent TTIs, TDD configurations, S subframe configurations, and channel configurations.

A method for implementing consistent configurations between the UE and the network includes:
the UE and the network perform communication according to prescribed consistent configurations; or
the network notifies the UE of configurations by using a broadcast message or a radio resource control (Radio Resources Control, RRC) message.

For the latter method, in the first apparatus for data transmission according to the embodiment of the present invention, the transmission module 302 is further configured to transmit, by using a second broadcast message, the TTI determined by the processing module 301 to the UE; and
the transmission module 302 is further configured to transmit, by using a first broadcast message or an RRC message, the TDD configuration and the S subframe configuration that are determined by the processing module 301 to the UE.

The first broadcast message and the second broadcast message may be a same broadcast message (for example, system information block type 1 (System Information Block type1, SIB1)) or different broadcast messages.

When the first broadcast message and the second broadcast message are both SIB1, an optional SIB1 message structure is as follows:

```
          TDD-Config information element
          --ASN1START
                 TDD-Config ::= SEQUENCE{
                 subframeAssignment ENUMERATED{
                                              sa0,sa1,sa2,sa3,sa4,sa5,sa6},
                 specialSubframePatterns ENUMERATED{
          ssp0,ssp1,ssp2,ssp3,ssp4,ssp5,ssp6,ssp7,ssp8}
           }
          TDD-Config-v1130 ::= SEQUENCE{
                 specialSubframePatterns ENUMERATED{ssp9,ssp10}
          TDD-Config-vXXXX ::= SEQUENCE{
                 subframeAssignment ENUMERATED{sa7},
                 specialSubframePatterns ENUMERATED{ssp11,ssp12}
           }
          --ASN1STOP
```

The foregoing is a definition in the Abstract Syntax Notation One (Abstract Syntax Notation One, ASN.1). The underline part is a definition added in the embodiment of the present invention.

In TDD-Config-vXXXX, vXXXX indicates that a corresponding standard version is pending. SEQUENCE indicates a sequence and is a data type, and it indicates that a corresponding IE is a set of sequenced elements. TDD-Config-vXXXX includes subframeAssignment and specialSubframePatterns.

SubframeAssignment represents a TDD configuration. In a definition in ASN.1, a data type of the TDD configuration is an enumeration type ENUMERATED, and a value of the TDD configuration may be any one or more of the TDD configurations added in the embodiment of the present invention. SpecialSubframePatterns represents an S subframe configuration. A data type of the S subframe configuration is also an enumeration type ENUMERATED, and a value of the S subframe configuration may be any one or more of the S subframe configurations added in the embodiment of the present invention.

The foregoing describes the first apparatus for data transmission according to the embodiment of the present invention is described, where the apparatus may be a network device in a TDD system. Based on the same inventive conception, an embodiment of the present invention further provides a second apparatus for data transmission. Because a principle for solving a technical problem by the apparatus is similar to that of the first apparatus for data transmission according to the embodiment of the present invention, no repetition is provided herein.

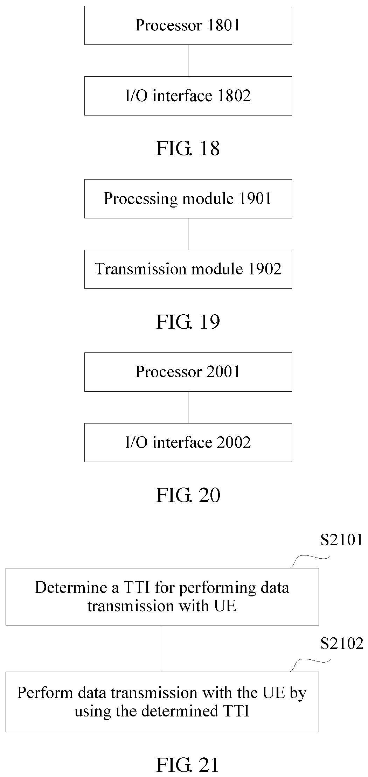

FIG. 18 is a schematic structural diagram of a second apparatus for data transmission according to an embodiment of the present invention. As shown in FIG. 18, the apparatus includes:
a processor 1801, configured to determine a transmission time interval TTI for performing data transmission with UE; and
an I/O interface 1802, configured to perform data transmission with the UE by using the TTI determined by the processor 1801; where
the TTI is shorter than 1 ms.

Optionally, the processor 1801 is further configured to determine a TDD configuration and a special subframe S subframe configuration of a radio frame; and
the I/O interface 1802 is specifically configured to perform data transmission with the UE by using the TTI, and the TDD configuration and the S subframe configuration of the radio frame that are determined by the processor 1801.

Optionally, the S subframe configuration includes:
if a cell coverage radius is greater than a preset coverage radius threshold, an S subframe in the radio frame includes M consecutive subframes, and a length of a guard period GP in the S subframe is determined according to the cell coverage radius; where
   M is an integer that is greater than 1.

Optionally, the TDD configuration includes: in the radio frame, a downlink-to-uplink switch-point periodicity is not greater than one half of a length of the radio frame.

Optionally, the S subframe configuration includes:
if one radio frame includes a plurality of S subframes, some S subframes include sounding reference signal SRS signals, and other S subframes do not include SRS signals.

Optionally, the processor 1801 is further configured to determine, when a broadcast channel occupies first two symbols in a second subframe in a radio frame, to skip transmitting a physical downlink control channel PDCCH on the first two symbols in the second subframe in the radio frame; and
the I/O interface 1802 is specifically configured to skip transmitting the PDCCH on the first two symbols in the second subframe in the radio frame to the UE.

Optionally, the processor 1801 is further configured to determine that a broadcast channel occupies a first subframe in a radio frame; and
the I/O interface 1802 is specifically configured to transmit the broadcast channel in the first subframe in the radio frame to the UE.

Optionally, the processor 1801 is further configured to determine a length of a physical random access channel PRACH, and if the determined length of the PRACH is greater than a length of a subframe, determine that the PRACH occupies C consecutive uplink subframes, where C is a positive integer; and
the I/O interface 1802 is specifically configured to receive, by using the PRACH determined by the processor 1801, an uplink random access preamble transmitted by the UE.

Optionally, the processor 1801 is specifically configured to determine that an S subframe and/or P downlink subframes are included between the C consecutive uplink subframes occupied by the PRACH, where P is a positive integer.

Optionally, the I/O interface 1802 is further configured to transmit, by using a first broadcast message or a radio resource control RRC message, the TDD configuration and the S subframe configuration determined by the processor 1801 to the UE.

Optionally, the TDD configuration and the S subframe configuration of the radio frame are prescribed by the processor 1801 and the UE.

Optionally, the I/O interface 1802 is further configured to transmit, by using a second broadcast message or an RRC message, the TTI determined by the processor 1801 to the UE.

Optionally, the TTI is prescribed with the UE.

Optionally, the processor 1801 is further configured to determine a time sequence of a hybrid automatic repeat request HARQ process for performing data transmission with the UE by the I/O interface 1802; and
the I/O interface 1802 is specifically configured to perform data transmission with the UE by using the time sequence of the HARQ process that is determined by the processor 1801; where
the time sequence of the HARQ process includes at least one of the following time sequences:
a first time interval between each downlink subframe for transmitting downlink control information DCI used for uplink scheduling and an uplink subframe for transmitting uplink data and corresponding to the downlink subframe, where the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay in reception processing of the DCI used for uplink scheduling, and a delay in uplink data packet assembly;
a second time interval between each downlink subframe for transmitting a physical hybrid automatic repeat indicator channel PHICH and an uplink subframe for transmitting retransmitted uplink data and corresponding to the downlink subframe, where the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, where n2 and Q are positive integers, and a TTI multiplied by Q is a sum of a delay in transmission of the PHICH, a delay in reception processing of the PHICH, and a delay in retransmitted uplink data packet assembly;
a third time interval between each uplink subframe for transmitting uplink data and each downlink subframe for transmitting a PHICH and corresponding to the uplink subframe, where the third time interval is a TTI multiplied by n3, and is set according to a first time interval between a corresponding uplink subframe for transmitting uplink data and a downlink subframe for transmitting DCI used for uplink scheduling and corresponding to the uplink subframe, n3 is a positive integer, and the third time interval is not less than a sum of a delay in transmission of the uplink data, a delay in reception processing of the uplink data, and a delay in PHICH data packet assembly; or
a fourth time interval between each downlink subframe for transmitting downlink data and each uplink subframe for transmitting an uplink feedback and corresponding to the downlink subframe, where the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, where n4 and W are positive integers, and a TTI multiplied by W is a sum of a delay in transmission of the downlink data, a delay in reception processing of the downlink data, and a delay in uplink feedback packet assembly.

The foregoing describes the first apparatus for data transmission and the second apparatus for data transmission according to the embodiments of the present invention. The foregoing two apparatuses for data transmission may be network devices, or used in network devices. A third apparatus for data transmission and a fourth apparatus for data transmission according to the embodiments of the present invention, which are described hereinafter, may be user equipment or used in user equipment. Persons skilled in the art all know that, the user equipment can perform data transmission with a network device only when configurations of the user equipment and the network device are consistent. Channel configurations, TDD configurations, S subframe configurations, TTI configurations, and the like of the third apparatus for data transmission and the fourth apparatus for data transmission are consistent with those of the first apparatus for data transmission and the second apparatus for data transmission. A technical principle of data transmission is the same as that in the two apparatuses. Therefore, for implementation thereof, reference may also be made to implementation of the two apparatuses, and no repetition is provided herein.

FIG. 19 is a schematic structural diagram of a third apparatus for data transmission according to an embodiment of the present invention. As shown in FIG. 19, the apparatus includes:
a processing module 1901, configured to determine a transmission time interval TTI for performing data transmission with a network; and
a transmission module 1902, configured to perform data transmission with the network by using the TTI determined by the processing module 1901; where
the TTI is shorter than 1 ms.

Optionally, the processing module 1901 is further configured to determine a TDD configuration and a special subframe S subframe configuration of a radio frame; and
the transmission module 1902 is specifically configured to perform data transmission with the network by using the TTI, and the TDD configuration and the S subframe configuration of the radio frame that are determined by the processing module 1901.

Optionally, the S subframe configuration includes:
if a cell coverage radius is greater than a preset coverage radius threshold, an S subframe in the radio frame includes M consecutive subframes, and a length of a guard period GP in the S subframe is determined according to the cell coverage radius; where
   M is an integer that is greater than 1.

Optionally, the TDD configuration includes: in the radio frame, a downlink-to-uplink switch-point periodicity is not greater than one half of a length of the radio frame.

Optionally, the S subframe configuration includes:
if one radio frame includes a plurality of S subframes, some S subframes include sounding reference signal SRS signals, and other S subframes do not include SRS signals.

Optionally, the processing module 1901 is further configured to determine, when a broadcast channel occupies first two symbols in a second subframe in a radio frame, that a physical downlink control channel PDCCH is not transmitted on the first two symbols in the second subframe in the radio frame; and
the transmission module 1902 is specifically configured to skip receiving, on the first two symbols in the second subframe in the radio frame, the PDCCH transmitted by the network.

Optionally, the processing module 1901 is further configured to determine that a broadcast channel occupies a first subframe in a radio frame; and
the transmission module 1902 is specifically configured to receive, in the first subframe in the radio frame, the broadcast channel transmitted by the network.

Optionally, the processing module 1901 is further configured to determine a length of a physical random access channel PRACH, and if the determined length of the PRACH is greater than a length of a subframe, determine that the PRACH occupies C consecutive uplink subframes, where C is a positive integer; and
the transmission module 1902 is specifically configured to transmit an uplink random access preamble to the network by using the PRACH determined by the processing module 1901.

Optionally, the processing module 1901 is specifically configured to determine that an S subframe and/or P downlink subframes are included between the C consecutive uplink subframes occupied by the PRACH, where P is a positive integer.

Optionally, the transmission module 1902 is further configured to receive a TDD configuration and an S subframe configuration of a radio frame that are transmitted by the network by using a first broadcast message or a radio resource control RRC message; and
the processing module 1901 is specifically configured to use the TDD configuration and the S subframe configuration of the radio frame that are received by the transmission module 1902, as the TDD configuration and the S subframe configuration of the radio frame that are determined.

Optionally, the TDD configuration and the S subframe configuration of the radio frame are prescribed by the processing module 1901 with the network.

Optionally, the transmission module 1902 is further configured to receive the TTI that is transmitted by the network by using a second broadcast message or a radio resource control RRC message; and
the processing module 1901 is specifically configured to use the TTI received by the transmission module 1902, as the determined TTI.

Optionally, the TTI is prescribed by the processing module 1901 with the network.

Optionally, the processing module 1901 is further configured to determine a time sequence of a hybrid automatic repeat request HARQ process for performing data transmission with the network by the transmission module 1902; and
the transmission module 1902 is specifically configured to perform data transmission with the network by using the time sequence of the HARQ process that is determined by the processing module 1901; where
the time sequence of the HARQ process includes at least one of the following time sequences:
a first time interval between each downlink subframe for transmitting downlink control information DCI used for uplink scheduling and an uplink subframe for transmitting uplink data and corresponding to the downlink subframe, where the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay in reception processing of the DCI used for uplink scheduling, and a delay in uplink data packet assembly;
a second time interval between each downlink subframe for transmitting a physical hybrid automatic repeat indicator channel PHICH and an uplink subframe for transmitting retransmitted uplink data and corresponding to the downlink subframe, where the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, where n2 and Q are positive integers, and a TTI multiplied by Q is a sum of a delay in transmission of the PHICH, a delay in reception processing of the PHICH, and a delay in performing retransmitted uplink data packet assembly;
a third time interval between each uplink subframe for transmitting uplink data and each downlink subframe for transmitting a PHICH and corresponding to the uplink subframe, where the third time interval is a TTI multiplied by n3, and is set according to a first time interval between a corresponding uplink subframe for transmitting uplink data and a downlink subframe for transmitting DCI used for uplink scheduling and corresponding to the uplink subframe, n3 is a positive integer, and the third time interval is not less than a sum of a delay in transmission of the uplink data, a delay in reception processing of the uplink data, and a delay in PHICH data packet assembly; or
a fourth time interval between each downlink subframe for transmitting downlink data and each uplink subframe for transmitting an uplink feedback and corresponding to the downlink subframe, where the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, where n4 and W are positive integers, and a TTI multiplied by W is a sum of a delay in transmission of the downlink data, a delay in reception processing of the downlink data, and a delay in performing uplink feedback packet assembly.

FIG. 20 is a schematic structural diagram of a fourth apparatus for data transmission according to an embodiment of the present invention. As shown in FIG. 20, the apparatus includes:
a processor 2001, configured to determine a transmission time interval TTI for performing data transmission with a network; and
an I/O interface 2002, configured to perform data transmission with the network by using the TTI determined by the processor 2001; where
the TTI is shorter than 1 ms.

Optionally, the processor 2001 is further configured to determine a TDD configuration and a special subframe S subframe configuration of a radio frame; and
the I/O interface 2002 is specifically configured to perform data transmission with the network by using the TTI, and the TDD configuration and the S subframe configuration of the radio frame that are determined by the processor 2001.

Optionally, the S subframe configuration includes:
if a cell coverage radius is greater than a preset coverage radius threshold, an S subframe in the radio frame includes M consecutive subframes, and a length of a guard period GP in the S subframe is determined according to the cell coverage radius; where
   M is an integer that is greater than 1.

Optionally, the TDD configuration includes: in the radio frame, a downlink-to-uplink switch-point periodicity is not greater than one half of a length of the radio frame.

Optionally, the S subframe configuration includes:
if one radio frame includes a plurality of S subframes, some S subframes include sounding reference signal SRS signals, and other S subframes do not include SRS signals.

Optionally, the processor 2001 is further configured to determine, when a broadcast channel occupies first two symbols in a second subframe in a radio frame, that a physical downlink control channel PDCCH is not transmitted on the first two symbols in the second subframe in the radio frame; and
the I/O interface 2002 is specifically configured to skip receiving, on the first two symbols in the second subframe in the radio frame, the PDCCH transmitted by the network.

Optionally, the processor 2001 is further configured to determine that a broadcast channel occupies a first subframe in a radio frame; and
the I/O interface 2002 is specifically configured to receive, in the first subframe in the radio frame, the broadcast channel transmitted by the network.

Optionally, the processor 2001 is further configured to determine a length of a physical random access channel PRACH, and if the determined length of the PRACH is greater than a length of a subframe, determine that the PRACH occupies C consecutive uplink subframes, where C is a positive integer; and
the I/O interface 2002 is specifically configured to transmit an uplink random access preamble to the network by using the PRACH determined by the processor 2001.

Optionally, the processor 2001 is specifically configured to determine that an S subframe and/or P downlink subframes are included between the C consecutive uplink subframes occupied by the PRACH, where P is a positive integer.

Optionally, the I/O interface 2002 is further configured to receive a TDD configuration and an S subframe configuration of a radio frame that are transmitted by the network by using a first broadcast message or a radio resource control RRC message; and
the processor 2001 is specifically configured to use the TDD configuration and the S subframe configuration of the radio frame that are received by the I/O interface 2002, as the TDD configuration and the S subframe configuration of the radio frame that are determined.

Optionally, the TDD configuration and the S subframe configuration of the radio frame are prescribed by the processor 2001 with the network.

Optionally, the I/O interface 2002 is further configured to receive the TTI that is transmitted by the network by using a second broadcast message or a radio resource control RRC message; and
the processor 2001 is specifically configured to use the TTI received by the I/O interface 2002, as the determined TTI.

Optionally, the TTI is prescribed by the processor 2001 with the network.

Optionally, the processor 2001 is further configured to determine a time sequence of a hybrid automatic repeat request HARQ process for performing data transmission with the network by the I/O interface 2002; and
the I/O interface 2002 is specifically configured to perform data transmission with the network by using the time sequence of the HARQ process that is determined by the processor 2001; where
the time sequence of the HARQ process includes at least one of the following time sequences:
a first time interval between each downlink subframe for transmitting downlink control information DCI used for uplink scheduling and an uplink subframe for transmitting uplink data and corresponding to the downlink subframe, where the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay in reception processing of the DCI used for uplink scheduling, and a delay in uplink data packet assembly;
a second time interval between each downlink subframe for transmitting a physical hybrid automatic repeat indicator channel PHICH and an uplink subframe for transmitting retransmitted uplink data and corresponding to the downlink subframe, where the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, where n2 and Q are positive integers, and a TTI multiplied by Q is a sum of a delay in transmission of the PHICH, a delay in reception processing of the PHICH, and a delay in performing retransmitted uplink data packet assembly;
a third time interval between each uplink subframe for transmitting uplink data and each downlink subframe for transmitting a PHICH and corresponding to the uplink subframe, where the third time interval is a TTI multiplied by n3, and is set according to a first time interval between a corresponding uplink subframe for transmitting uplink data and a downlink subframe for transmitting DCI used for uplink scheduling and corresponding to the uplink subframe, n3 is a positive integer, and the third time interval is not less than a sum of a delay in transmission of the uplink data, a delay in reception processing of the uplink data, and a delay in PHICH data packet assembly; or
a fourth time interval between each downlink subframe for transmitting downlink data and each uplink subframe for transmitting an uplink feedback and corresponding to the downlink subframe, where the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, where n4 and W are positive integers, and a TTI multiplied by W is a sum of a delay in transmission of the downlink data, a delay in reception processing of the downlink data, and a delay in performing uplink feedback packet assembly.

The foregoing describes the fourth apparatus for data transmission according to the embodiment of the present invention. The following describes a first method for data transmission and a second method for data transmission according to the embodiments of the present invention. An inventive conception of the first method for data transmission is the same as that of the first apparatus for data transmission and the second apparatus for data transmission according to the embodiments of the present invention, and for implementation thereof, reference may be made to the implementation of the two apparatuses for data transmission. An inventive conception of the second method for data transmission is the same as that of the third apparatus for data transmission and the fourth apparatus for data transmission according to the embodiments of the present invention, and for implementation thereof, reference may be made to the implementation of the two apparatuses for data transmission. No repetition is provided herein.

FIG. 21 is a flowchart of a first method for data transmission according to an embodiment of the present invention. As shown in FIG. 21, the method includes:
S2101. Determine a TTI for performing data transmission with UE.
S2102. Perform data transmission with the UE by using the determined TTI; where the TTI is shorter than 1 ms.

Optionally, after the determining a TTI for performing data transmission with the UE in step S2101, and before the performing data transmission with the UE in step S2102, the method further includes: determining a TDD configuration and a special subframe S subframe configuration of a radio frame; and
the performing data transmission with the UE by using the determined TTI in step S2102 includes: performing data transmission with the UE by using the TTI, and the TDD configuration and the S subframe configuration of the radio frame that are determined.

Optionally, the S subframe configuration includes:
if a cell coverage radius is greater than a preset coverage radius threshold, an S subframe in the radio frame includes M consecutive subframes, and a length of a guard period GP in the S subframe is determined according to the cell coverage radius; where
   M is an integer that is greater than 1.

Optionally, the TDD configuration includes:
in the radio frame, a downlink-to-uplink switch-point periodicity is not greater than one half of a length of the radio frame.

Optionally, the S subframe configuration includes:
if one radio frame includes a plurality of S subframes, some S subframes include sounding reference signal SRS signals, and other S subframes do not include SRS signals.

Optionally, after the determining a TTI for performing data transmission with the UE in step S2101, and before the performing data transmission with the UE in step S2102, the method further includes:
if a broadcast channel occupies first two symbols in a second subframe in a radio frame, determining to skip transmitting a physical downlink control channel PDCCH on the first two symbols in the second subframe in the radio frame; and
the performing data transmission with the UE in step S2102 includes: skipping transmitting the PDCCH on the first two symbols in the second subframe in the radio frame to the UE.

Optionally, after the determining a TTI for performing data transmission with the UE in step S2101, and before the performing data transmission with the UE in step S2102, the method further includes: determining that a broadcast channel occupies a first subframe in a radio frame; and
the performing data transmission with the UE in step S2102 includes: transmitting the broadcast channel in the first subframe in the radio frame to the UE.

Optionally, after the determining a TTI for performing data transmission with the UE in step S2101, and before the performing data transmission with the UE in step S2102, the method further includes:
determining a length of a PRACH; and
if the determined length of the PRACH is greater than a length of a subframe, determining that the PRACH occupies C consecutive uplink subframes, where C is a positive integer; and
the performing data transmission with the UE in step S2102 includes: receiving, by using the determined PRACH, an uplink random access preamble transmitted by the UE.

Optionally, after the determining that the PRACH occupies C consecutive uplink subframes, and before the performing data transmission with the UE in step S2102, the method further includes:
determining that an S subframe and/or P downlink subframes are included between the C consecutive uplink subframes occupied by the PRACH, where P is a positive integer.

Optionally, after the determining a TDD configuration and an S subframe configuration, and before the performing data transmission with the UE in step S2102, the method further includes:
transmitting, by using a first broadcast message or a radio resource control RRC message, the TDD configuration and the S subframe configuration that are determined to the UE.

Optionally, the TDD configuration and the S subframe configuration of the radio frame are prescribed with the UE.

Optionally, after the determining a TTI for performing data transmission with the UE in step S2101, and before the performing data transmission with the UE in step S2102, the method further includes:
transmitting, by using a second broadcast message or an RRC message, the determined TTI to the UE.

Optionally, the TTI is prescribed with the UE.

Optionally, after the determining a TTI for performing data transmission with the UE in step S2101, and before the performing data transmission with the UE in step S2102, the method further includes: determining a time sequence of a hybrid automatic repeat request HARQ process for performing data transmission with the UE; and
the performing data transmission with the UE in step S2102 includes: performing data transmission with the UE by using the determined time sequence of the HARQ process; where
the time sequence of the HARQ process includes at least one of the following time sequences:
a first time interval between each downlink subframe for transmitting downlink control information DCI used for uplink scheduling and an uplink subframe for transmitting uplink data and corresponding to the downlink subframe, where the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay in reception processing of the DCI used for uplink scheduling, and a delay in uplink data packet assembly;
a second time interval between each downlink subframe for transmitting a physical hybrid automatic repeat indicator channel PHICH and an uplink subframe for transmitting retransmitted uplink data and corresponding to the downlink subframe, where the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, where n2 and Q are positive integers, and a TTI multiplied by Q is a sum of a delay in transmission of the PHICH, a delay in reception processing of the PHICH, and a delay in retransmitted uplink data packet assembly;
a third time interval between each uplink subframe for transmitting uplink data and each downlink subframe for transmitting a PHICH and corresponding to the uplink subframe, where the third time interval is a TTI multiplied by n3, and is set according to a first time interval between a corresponding uplink subframe for transmitting uplink data and a downlink subframe for transmitting DCI used for uplink scheduling and corresponding to the uplink subframe, n3 is a positive integer, and the third time interval is not less than a sum of a delay in transmission of the uplink data, a delay in reception processing of the uplink data, and a delay in PHICH data packet assembly; or
a fourth time interval between each downlink subframe for transmitting downlink data and each uplink subframe for transmitting an uplink feedback and corresponding to the downlink subframe, where the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, where n4 and W are positive integers, and a TTI multiplied by W is a sum of a delay in transmission of the downlink data, a delay in reception processing of the downlink data, and a delay in uplink feedback packet assembly.

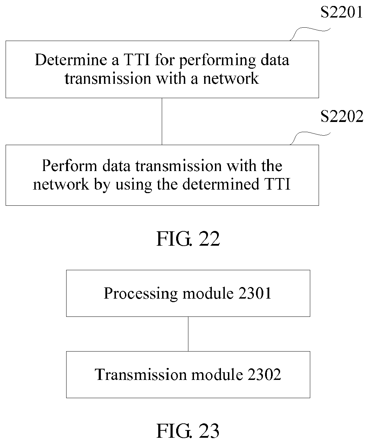

FIG. 22 is a flowchart of a second method for data transmission according to an embodiment of the present invention. As shown in FIG. 22, the method includes:
S2201. Determine a TTI for performing data transmission with a network.
S2202. Perform data transmission with the network by using the determined TTI; where
   the TTI is shorter than 1 ms.

Optionally, after the determining a TTI for performing data transmission with the network in step S2201, and before the performing data transmission with the network in step S2202, the method further includes: determining a TDD configuration and a special subframe S subframe configuration of a radio frame; and
the performing data transmission with the network by using the determined TTI in step S2202 includes: performing data transmission with the network by using the TTI, and the TDD configuration and the S subframe configuration of the radio frame that are determined.

Optionally, the S subframe configuration includes:
if a cell coverage radius is greater than a preset coverage radius threshold, an S subframe in the radio frame includes M consecutive subframes, and a length of a guard period GP in the S subframe is determined according to the cell coverage radius; where
   M is an integer that is greater than 1.

Optionally, the TDD configuration includes:
in the radio frame, a downlink-to-uplink switch-point periodicity is not greater than one half of a length of the radio frame.

Optionally, the S subframe configuration includes:
if one radio frame includes a plurality of S subframes, some S subframes include sounding reference signal SRS signals, and other S subframes do not include SRS signals.

Optionally, after the determining a TTI for performing data transmission with the network in step S2201, and before the performing data transmission with the network in step S2202, the method further includes: when a broadcast channel occupies first two symbols in a second subframe in a radio frame, determining that a physical downlink control channel PDCCH is not transmitted on the first two symbols in the second subframe in the radio frame; and
the performing data transmission with the network in step S2202 includes: skipping receiving, on the first two symbols in the second subframe in the radio frame, the PDCCH transmitted by the network.

Optionally, after the determining a TTI for performing data transmission with the network in step S2201, and before the performing data transmission with the network in step S2202, the method further includes: determining that a broadcast channel occupies a first subframe in a radio frame; and
the performing data transmission with the network in step S2202 includes: receiving, in the first subframe in the radio frame, the broadcast channel transmitted by the network.

Optionally, after the determining a TTI for performing data transmission with the network in step S2201, and before the performing data transmission with the network in step S2202, the method further includes:
determining a length of a physical random access channel PRACH; and
if the determined length of the PRACH is greater than a length of a subframe, determining that the PRACH occupies C consecutive uplink subframes, where C is a positive integer; and
the performing data transmission with the network in step S2202 includes: transmitting an uplink random access preamble to the network by using the determined PRACH.

Optionally, after the determining that the PRACH occupies C consecutive uplink subframes, and before the performing data transmission with the network in step S2202, the method further includes:
determining that an S subframe and/or P downlink subframes are included between the C consecutive uplink subframes occupied by the PRACH, where P is a positive integer.

Optionally, the determining a TDD configuration and a special subframe S subframe configuration of a radio frame includes:
receiving a TDD configuration and a special subframe S subframe configuration of a radio frame that are transmitted by the network by using a first broadcast message or a radio resource control RRC; and
using the TDD configuration and the S subframe configuration that are received, as the TDD configuration or the S subframe configuration that is determined.

Optionally, the TDD configuration and the S subframe configuration are prescribed with the network.

Optionally, the determining a TTI for performing data transmission with the network in step S2201 includes:
receiving the TTI that is transmitted by the network by using a second broadcast message or an RRC message; and
using the received TTI as the determined TTI for data transmission.

Optionally, the TTI is prescribed with the network.

Optionally, after the determining a TTI for performing data transmission with the network in step S2201, and before the performing data transmission with the network in step S2202, the method further includes:
determining a time sequence of a hybrid automatic repeat request HARQ process for performing data transmission with the network; and
the performing data transmission with the network in step S2202 includes: performing data transmission with the network by using the determined time sequence of the HARQ process; where
   the time sequence of the HARQ process includes at least one of the following time sequences:
   a first time interval between each downlink subframe for transmitting downlink control information DCI used for uplink scheduling and an uplink subframe for transmitting uplink data and corresponding to the downlink subframe, where the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay in reception processing of the DCI used for uplink scheduling, and a delay in uplink data packet assembly;
   a second time interval between each downlink subframe for transmitting a physical hybrid automatic repeat indicator channel PHICH and an uplink subframe for transmitting retransmitted uplink data and corresponding to the downlink subframe, where the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, where n2 and Q are positive integers, and a TTI multiplied by Q is a sum of a delay in transmission of the PHICH, a delay in reception processing of the PHICH, and a delay in retransmitted uplink data packet assembly;
   a third time interval between each uplink subframe for transmitting uplink data and each downlink subframe for transmitting a PHICH and corresponding to the uplink subframe, where the third time interval is a TTI multiplied by n3, and is set according to a first time interval between a corresponding uplink subframe for transmitting uplink data and a downlink subframe for transmitting DCI used for uplink scheduling and corresponding to the uplink subframe, n3 is a positive integer, and the third time interval is not less than a sum of a delay in transmission of the uplink data, a delay in reception processing of the uplink data, and a delay in PHICH data packet assembly; or
   a fourth time interval between each downlink subframe for transmitting downlink data and each uplink subframe for transmitting an uplink feedback and corresponding to the downlink subframe, where the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, where n4 and W are positive integers, and a TTI multiplied by W is a sum of a delay in transmission of the downlink data, a delay in reception processing of the downlink data, and a delay of UE in performing uplink feedback packet assembly.

The foregoing describes the first four apparatuses for data transmission and the first two methods for data transmission according to the embodiments of the present invention; by shortening a TTI, the apparatuses and the methods implement reduction of an RTT, and improve data transmission efficiency.

The following describes a fifth apparatus for data transmission, a sixth apparatus for data transmission, a seventh apparatus for data transmission, an eighth apparatus for data transmission, a third method for data transmission, and a fourth method for data transmission according to the embodiments of the present invention. In all the four apparatuses for data transmission and the two methods for data transmission, a time sequence of an HARQ process for data transmission is determined according to a processing delay of a device, so that the whole HARQ process becomes compact in time, and an RTT is effectively shortened. Because principles of the present invention are similar, the following emphatically describes the fifth apparatus for data transmission and the seventh apparatus for data transmission according to the embodiments of the present invention. For implementation of the sixth apparatus for data transmission and the third method for data transmission, reference may be made to implementation of the fifth apparatus for data transmission. For implementation of the eighth apparatus for data transmission and the fourth method for data transmission, reference may be made to implementation of the seventh apparatus for data transmission. No repetition is provided herein.

FIG. 23 is a schematic structural diagram of a fifth apparatus for data transmission according to an embodiment of the present invention. As shown in FIG. 23, the apparatus includes:
a processing module 2301, configured to determine, according to a processing delay of UE, a time sequence of an HARQ process for performing data transmission with the UE; and
a transmission module 2302, configured to perform data transmission with the UE according to the time sequence of the HARQ process that is determined by the processing module 2301.

Optionally, the processing delay of the UE includes: a delay of the UE in reception processing of downlink data or downlink signaling, and a delay of the UE in performing uplink data packet assembly, retransmitted uplink data packet assembly, or uplink signaling packet assembly.

The time sequence of the HARQ process includes at least one of the following time sequences:
a first time interval between each downlink subframe for transmitting DCI used for uplink scheduling and an uplink subframe for transmitting uplink data and corresponding to the downlink subframe;
a second time interval between each downlink subframe for transmitting a PHICH and an uplink subframe for transmitting retransmitted uplink data and corresponding to the downlink subframe; or
a fourth time interval between each downlink subframe for transmitting downlink data and each uplink subframe for transmitting an uplink feedback and corresponding to the downlink subframe.

The apparatus may be applied to a TDD system to shorten an RTT in the TDD system.

FIG. 1 shows a time sequence of an HARQ process in an existing TDD system. After UE receives downlink data or a downlink signal transmitted by a base station, a processing delay of three subframes is required. With evolution of technologies, if a processing capability of UE is enhanced, and the processing delay of the UE can be less than three subframes, for example, two subframes, if processing is performed still according to the HARQ in the existing system, after completion of processing of downlink data or a downlink symbol, the UE needs to further wait for one subframe to perform uplink transmission, which actually wastes the processing capability of the UE.

In the third apparatus for data transmission according to the embodiment of the present invention, the time sequence of the HARQ process is determined according to the processing delay of the UE. Therefore, in a case in which the processing delay of the UE is reduced, a compact time sequence of the HARQ process may be determined.

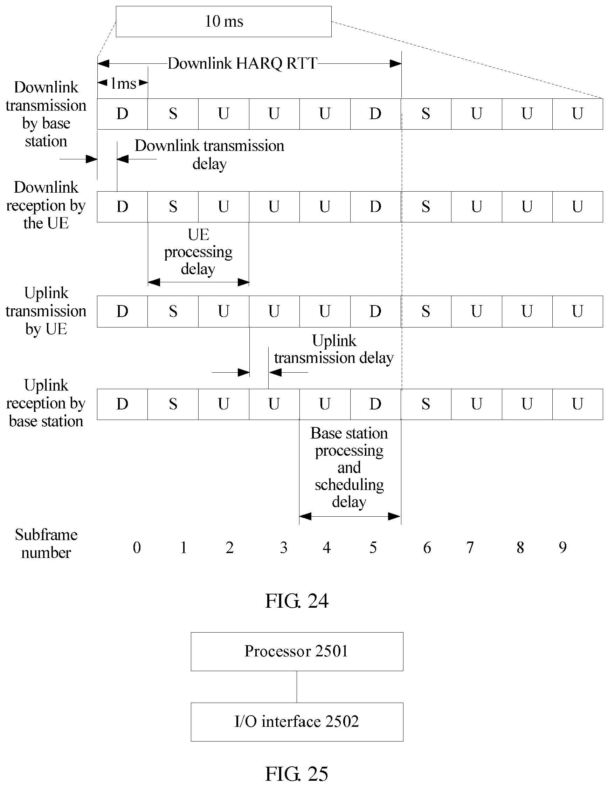

For example, as shown in FIG. 24, after receiving downlink data or a downlink signal transmitted by a base station, the UE may complete processing in two subframes (that is, complete processing such as decoding and uplink data packet assembly). That is, uplink transmission may be implemented in a subframe 3, and a downlink HARQ RTT is shorter than that in FIG. 1 by one subframe. If a processing delay of the base station can also be shortened by one subframe, the whole downlink HARQ RTT is shortened to six subframes, and is shorter than that in FIG. 1 by two subframes.

Optionally, the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay of the UE in reception processing of the DCI used for uplink scheduling, and a delay of the UE in performing uplink data packet assembly;
the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, where n2 and Q are positive integers, and a TTI multiplied by Q is a sum of a delay in transmission of the PHICH, a delay of the UE in reception processing of the PHICH, and a delay of the UE in performing retransmitted uplink data packet assembly; and
the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, where n4 and W are positive integers, and a TTI multiplied by W is a sum of a delay in transmission of the downlink data, a delay of the UE in reception processing of the downlink data, and a delay of the UE in performing uplink feedback packet assembly.

Optionally, in a radio frame, a downlink-to-uplink switch-point periodicity is not greater than one half of a length of the radio frame, so that downlink-to-uplink switch-points are added in the radio frame.

Similar to the optional solution corresponding to the first apparatus for data transmission according to the embodiment of the present invention, this optional solution may be used in combination with a TTI configuration to determine the time sequence of the HARQ process.

Optionally, the processing module 2301 is further configured to determine, before the transmission module 2302 performs data transmission with the UE, a transmission time interval TTI for performing data transmission with the UE; and
the transmission module 2302 is specifically configured to perform data transmission with the UE by using the TTI determined by the processing module 2301; where
the TTI is shorter than 1 ms.

In this optional solution, in comparison with the TTI of 1 ms in the existing TDD system, the TTI is further reduced, and therefore, the RTT is further shortened.

For the TDD configuration in the existing TDD system shown in Table 1, currently, time sequences of the HARQ process shown in Table 11, Table 13, and Table 15 may be used; if the fifth apparatus for data transmission according to the embodiment of the present invention is used, the delay in the HARQ process may be shortened significantly. For details, reference may be made to Table 12, Table 14 and Table 16.

Table 11 shows that the UE determines a quantity of subframes after which uplink data is transmitted after the UE receives a PHICH in the existing TDD system.

**Table 11**

| **TDD configuration** | **Subframe number** | | | | | | | | | |
|---|---|---|---|---|---|---|---|---|---|---|
| | 0 | 1 | 2 | 3 | 4 | 5 | 6 | 7 | 8 | 9 |
| 0 | 4 | 6 | | | | 4 | 6 | | | |
| 1 | | 6 | | | 4 | | 6 | | | 4 |
| 2 | | | | 4 | | | | | 4 | |
| 3 | 4 | | | | | | | | 4 | 4 |
| 4 | | | | | | | | | 4 | 4 |
| 5 | | | | | | | | | 4 | |
| 6 | 7 | 7 | | | | 7 | 7 | | | 5 |

After the fifth apparatus for data transmission according to the embodiment of the present invention is used, the time sequence may be shown in Table 12. As can be seen, after the UE receives the PHICH, the UE may transmit uplink data after a smaller quantity of subframes, thereby shortening the RTT.

**Table 12**

| **TDD configuration** | **Subframe number** | | | | | | | | | |
|---|---|---|---|---|---|---|---|---|---|---|
| | 0 | 1 | 2 | 3 | 4 | 5 | 6 | 7 | 8 | 9 |
| 0 | 3 | 3 | | | | 3 | 3 | | | |
| 1 | 3 | 3 | | | | 3 | 3 | | | |
| 2 | 3 | | | | | 3 | | | | |
| 3 | | | | | | 3 | 3 | 3 | | |
| 4 | | | | | | 3 | 3 | | | |
| 5 | | | | | | 3 | | | | |
| 6 | 3 | 3 | | | | 3 | 3 | | | 5 |

Table 13 shows that in the existing TDD system, the UE determines a quantity of subframes after which a PHICH feedback transmitted by the base station is received after the UE transmits uplink data.

**Table 13**

| **TDD configuration** | **Subframe number** | | | | | | | | | |
|---|---|---|---|---|---|---|---|---|---|---|
| | 0 | 1 | 2 | 3 | 4 | 5 | 6 | 7 | 8 | 9 |
| 0 | | | 4 | 7 | 6 | | | 4 | 7 | 6 |
| 1 | | | 4 | 6 | | | | 4 | 6 | |
| 2 | | | 6 | | | | | 6 | | |
| 3 | | | 6 | 6 | 6 | | | | | |
| 4 | | | 6 | 6 | | | | | | |
| 5 | | | 6 | | | | | | | |
| 6 | | | 4 | 6 | 6 | | | 4 | 7 | |

After the fifth apparatus for data transmission according to the embodiment of the present invention is used, the time sequence may be shown in Table 14. As can be seen, after the UE transmits uplink data, the UE may receive a downlink PHICH after a smaller quantity of subframes, thereby shortening the RTT.

**Table 14**

| **TDD configuration** | **Subframe number** | | | | | | | | | |
|---|---|---|---|---|---|---|---|---|---|---|
| | 0 | 1 | 2 | 3 | 4 | 5 | 6 | 7 | 8 | 9 |
| 0 | | | 3 | 3 | 6 | | | 3 | 3 | 6 |
| 1 | | | 3 | 3 | | | | 3 | 3 | |
| 2 | | | 3 | | | | | 3 | | |
| 3 | | | 3 | 3 | 3 | | | | | |
| 4 | | | 3 | 3 | | | | | | |
| 5 | | | 3 | | | | | | | |
| 6 | | | 3 | 3 | 5 | | | 3 | 3 | |

Table 15 shows a quantity of subframes after which the UE uplink-transmits data after the base station transmits DCI used for uplink scheduling in the existing TDD system.

**Table 15**

| **TDD configuration** | **Subframe number** | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | - | 4 | - | - | 6 | - | 4 |
| 1 | - | - | 7, 6 | 4 | - | - | - | 7, 6 | 4 | - |
| 2 | - | - | 8, 7, 4, 6 | - | - | - | - | 8, 7, 4, 6 | - | - |
| 3 | - | - | 7, 6, 11 | 6, 5 | 5, 4 | - | - | - | - | - |
| 4 | - | - | 12, 8, 7, 11 | 6, 5, 4, 7 | - | - | - | - | - | - |
| 5 | - | - | 13, 12, 9, 8, 7, 5, 4, 11, 6 | - | - | - | - | - | - | - |
| 6 | - | - | 7 | 7 | 5 | - | - | 7 | 7 | - |

After the fifth apparatus for data transmission according to the embodiment of the present invention is used, the time sequence may be shown in Table 16. As can be seen, after the UE receives the DCI used for uplink scheduling, the UE may perform uplink data transmission after a smaller quantity of subframes, thereby shortening the RTT.

**Table 16**

| **TDD configuration** | **Subframe number** | | | | | | | | | |
|---|---|---|---|---|---|---|---|---|---|---|
| | 0 | 1 | 2 | 3 | 4 | 5 | 6 | 7 | 8 | 9 |
| 0 | - | - | | 3 | 3 | - | - | | 3- | 3 |
| 1 | | - | 3, 6 | 3 | | - | - | 3, 6 | 3 | - |
| 2 | - | - | 3, 4, 6, 7 | | | - | - | 3, 4, 6, 7 | - | - |
| 3 | - | - | 5, 6, 7 | 4, 5 | 3, 4 | - | - | | - | - |
| 4 | - | - | 6, 7, 8, 11 | 3, 4, 5, 6 | | - | - | | - | - |
| 5 | - | - | 3, 4, 5, 6, 7, 8, 9, 11, 12 | | | - | - | | - | - |
| 6 | - | - | 6 | 4 | 4 | - | - | 6 | 3 | - |

FIG. 25 is a schematic structural diagram of a sixth apparatus for data transmission according to an embodiment of the present invention. As shown in FIG. 25, the apparatus includes:
a processor 2501, configured to determine, according to a processing delay of user equipment UE, a time sequence of a hybrid automatic repeat request HARQ process for performing data transmission with the UE; and
an I/O interface 2502, configured to perform data transmission with the UE according to the time sequence of the HARQ process that is determined by the processor 2501.

Optionally, the processing delay of the UE includes: a delay of the UE in reception processing of downlink data or downlink signaling, and a delay of the UE in performing uplink data packet assembly, retransmitted uplink data packet assembly, or uplink signaling packet assembly.

Optionally, the time sequence of the HARQ process includes one or more of the following time sequences:
a first time interval between each downlink subframe for transmitting downlink control information DCI used for uplink scheduling and an uplink subframe for transmitting uplink data and corresponding to the downlink subframe;
a second time interval between each downlink subframe for transmitting a physical hybrid automatic repeat indicator channel PHICH and an uplink subframe for transmitting retransmitted uplink data and corresponding to the downlink subframe; or
a fourth time interval between each downlink subframe for transmitting downlink data and each uplink subframe for transmitting an uplink feedback and corresponding to the downlink subframe; where
the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay of the UE in reception processing of the DCI used for uplink scheduling, and a delay of the UE in performing uplink data packet assembly;
the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, where n2 and Q are positive integers, and a TTI multiplied by Q is a sum of a delay in transmission of the PHICH, a delay of the UE in reception processing of the PHICH, and a delay of the UE in performing retransmitted uplink data packet assembly; and
the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, where n4 and W are positive integers, and a TTI multiplied by W is a sum of a delay in transmission of the downlink data, a delay of the UE in reception processing of the downlink data, and a delay of the UE in performing uplink feedback packet assembly.

Optionally, in a radio frame, a downlink-to-uplink switch-point periodicity is not greater than one half of a length of the radio frame, so that downlink-to-uplink switch-points are added in the radio frame.

Optionally, the processor 2501 is further configured to determine, before the I/O interface 2502 performs data transmission with the UE, a transmission time interval TTI for performing data transmission with the UE; and
the I/O interface 2502 is specifically configured to perform data transmission with the UE by using the TTI and the time sequence of the HARQ process that are determined by the processor 2501; where
the TTI is shorter than 1 ms.

Similar to the principle of the fifth apparatus for data transmission according to the embodiment of the present invention, in a seventh apparatus for data transmission according to an embodiment of the present invention, an RTT can also be shortened by determining a time sequence of an HARQ process according to a processing delay of a network.

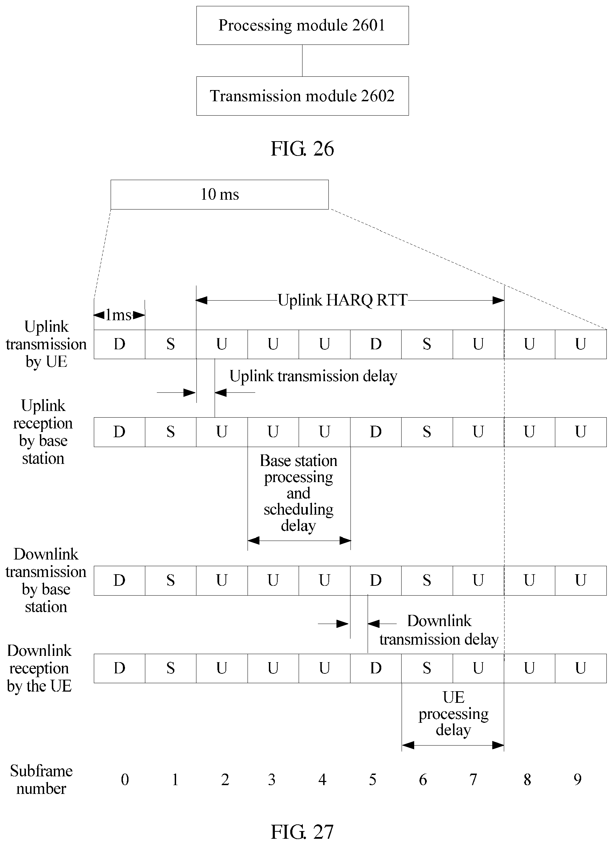

FIG. 26 is a schematic structural diagram of a seventh apparatus for data transmission according to an embodiment of the present invention. As shown in FIG. 26, the apparatus includes:
a processing module 2601, configured to determine, according to a processing capability of a network, a time sequence of an HARQ process for performing data transmission with the network; and
a transmission module 2602, configured to perform data transmission with the network according to the time sequence of the HARQ process that is determined by the processing module 2601.

The processing delay of the network may include:
a delay of the network in reception processing of uplink data or uplink signaling, and a delay of the network in performing downlink data packet assembly, retransmitted downlink data packet assembly, or uplink signaling packet assembly.

The time sequence of the HARQ process includes a third time interval between each uplink subframe for transmitting uplink data and each downlink subframe for transmitting a PHICH and corresponding to the uplink subframe; where
each third time interval is set according to a first time interval between a corresponding uplink subframe for transmitting uplink data and a downlink subframe for transmitting DCI and corresponding to the uplink subframe, and satisfies: the third time interval is not less than a sum of a delay in transmission of the uplink data, a delay of the network in reception processing of the received uplink data, and a delay of the network in performing PHICH data packet assembly; and
the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay in reception processing of the DCI used for uplink scheduling, and a delay in uplink data packet assembly.

The apparatus may be applied to a TDD system to shorten an RTT in the TDD system.

FIG. 2 shows another time sequence of an HARQ process in an existing TDD system. After a base station receives uplink data or an uplink signal transmitted by UE, a processing and scheduling delay of three subframes is required. With evolution of technologies, if a processing capability of each base station in a network is enhanced, and a processing and scheduling delay of the base station can be less than three subframes, for example, two subframes, if processing is performed still according to the HARQ in the existing system, after completion of processing of uplink data or an uplink symbol, the base station needs to further wait for one subframe to perform downlink transmission, which actually wastes the processing capability of the base station.

In the seventh apparatus for data transmission according to the embodiment of the present invention, the time sequence of the HARQ process is determined according to the processing delay of the network. Therefore, in a case in which the processing delay of the network is reduced, a compact time sequence of the HARQ process may be determined.

For example, as shown in FIG. 27, after receiving uplink data or an uplink signal transmitted by UE, the network (a base station in FIG. 27) may complete processing in two subframes (that is, complete processing such as decoding, scheduling, and downlink data packet assembly). Downlink transmission may be implemented in a subframe 5, and an uplink HARQ RTT is shorter than that in FIG. 2 by one subframe. If a processing delay of the UE can also be shortened by one subframe, the whole uplink HARQ RTT is shortened to six subframes, and is shorter than that in FIG. 2 by two subframes.

Optionally, in a radio frame, a downlink-to-uplink switch-point periodicity is not greater than one half of a length of the radio frame, so that downlink-to-uplink switch-points are added in the radio frame.

Similar to the optional solution corresponding to the third apparatus for data transmission according to the embodiment of the present invention, this optional solution may be used in combination with a TTI configuration to determine the time sequence of the HARQ process.

Optionally, the processing module 2601 is further configured to determine, before the transmission module 2602 performs data transmission with the network, a transmission time interval TTI for performing data transmission with the network; and
the transmission module 2602 is specifically configured to perform data transmission with the network by using the TTI determined by the processing module 2601; where
the TTI is shorter than 1 ms.

In this optional solution, in comparison with the TTI of 1 ms in the existing TDD system, the TTI is further reduced, and therefore, the RTT is further shortened.

Similar to the principle of the fifth apparatus for data transmission according to the embodiment of the present invention, in the seventh apparatus for data transmission according to the embodiment of the present invention, the RTT can also be shortened by determining the time sequence of the HARQ process according to the processing delay of the network.

Likewise, in the seventh apparatus for data transmission according to the embodiment of the present invention, HARQ time sequences shown in Table 12, Table 14, and Table 16 may also be used, which reduces the RTT.

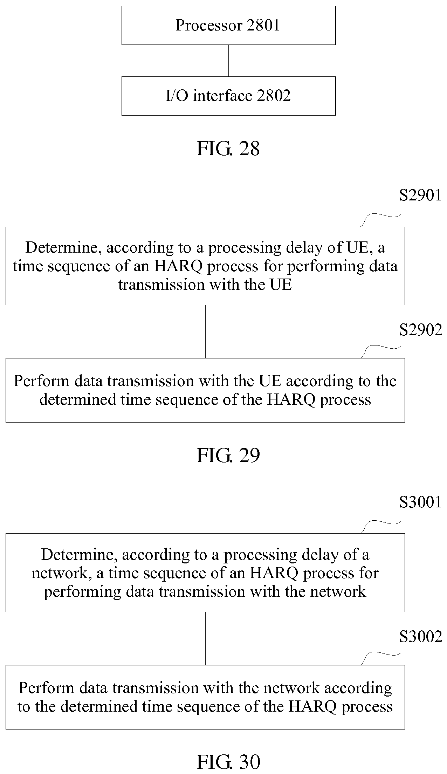

FIG. 28 is a schematic structural diagram of an eighth apparatus for data transmission according to an embodiment of the present invention. As shown in FIG. 28, the apparatus includes:
a processor 2801, configured to determine, according to a processing delay of a network, a time sequence of an HARQ process for performing data transmission with the network; and
an I/O interface 2802, configured to perform data transmission with the network according to the time sequence of the HARQ process that is determined by the processor 2801.

Optionally, the processing delay of the network includes:
a delay of the network in reception processing of uplink data or uplink signaling, and a delay of the network in performing downlink data packet assembly, retransmitted downlink data packet assembly, or uplink signaling packet assembly.

Optionally, the time sequence of the HARQ process includes a third time interval between each uplink subframe for transmitting uplink data and each downlink subframe for transmitting a PHICH and corresponding to the uplink subframe; where
each third time interval is set according to a first time interval between a corresponding uplink subframe for transmitting uplink data and a downlink subframe for transmitting DCI and corresponding to the uplink subframe, and satisfies: the third time interval is not less than a sum of a delay in transmission of the uplink data, a delay of the network in reception processing of the received uplink data, and a delay of the network in performing PHICH data packet assembly; and
the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay in reception processing of the DCI used for uplink scheduling, and a delay in uplink data packet assembly.

Optionally, in a radio frame, a downlink-to-uplink switch-point periodicity is not greater than one half of a length of the radio frame, so that downlink-to-uplink switch-points are added in the radio frame.

Optionally, the processor 2801 is further configured to determine, before the I/O interface 2802 performs data transmission with the network, a transmission time interval TTI for performing data transmission with the network; and
the I/O interface 2802 is specifically configured to perform data transmission with the network by using the TTI determined by the processor 2801; where
the TTI is shorter than 1 ms.

FIG. 29 is a flowchart of a third method for data transmission according to an embodiment of the present invention. As shown in FIG. 29, the method includes:
S2901. Determine, according to a processing delay of UE, a time sequence of an HARQ process for performing data transmission with the UE.
S2902. Perform data transmission with the UE according to the determined time sequence of the HARQ process.

Optionally, the processing delay of the UE includes: a delay of the UE in reception processing of downlink data or downlink signaling, and a delay of the UE in performing uplink data packet assembly, retransmitted uplink data packet assembly, or uplink signaling packet assembly.

Optionally, the time sequence of the HARQ process includes one or more of the following time sequences:
a first time interval between each downlink subframe for transmitting downlink control information DCI used for uplink scheduling and an uplink subframe for transmitting uplink data and corresponding to the downlink subframe;
a second time interval between each downlink subframe for transmitting a physical hybrid automatic repeat indicator channel PHICH and an uplink subframe for transmitting retransmitted uplink data and corresponding to the downlink subframe; or
a fourth time interval between each downlink subframe for transmitting downlink data and each uplink subframe for transmitting an uplink feedback and corresponding to the downlink subframe; where
   the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay of the UE in reception processing of the DCI used for uplink scheduling, and a delay of the UE in performing uplink data packet assembly;
   the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, where n2 and Q are positive integers, and a TTI multiplied by Q is a sum of a delay in transmission of the PHICH, a delay of the UE in reception processing of the PHICH, and a delay of the UE in performing retransmitted uplink data packet assembly; and
   the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, where n4 and W are positive integers, and a TTI multiplied by W is a sum of a delay in transmission of the downlink data, a delay of the UE in reception processing of the downlink data, and a delay of the UE in performing uplink feedback packet assembly.

Optionally, in a radio frame, a downlink-to-uplink switch-point periodicity is not greater than one half of a length of the radio frame, so that downlink-to-uplink switch-points are added in the radio frame.

Optionally, before the performing data transmission with the UE, the method further includes: determining a transmission time interval TTI for performing data transmission with the UE; and
the performing data transmission with the UE includes: performing data transmission with the UE by using the determined TTI; where
the TTI is shorter than 1 ms.

FIG. 30 is a flowchart of a fourth method for data transmission according to an embodiment of the present invention. As shown in FIG. 30, the method includes:
S3001. Determine, according to a processing delay of a network, a time sequence of an HARQ process for performing data transmission with the network.
S3002. Perform data transmission with the network according to the determined time sequence of the HARQ process.

Optionally, the processing delay of the network includes:
a delay of the network in reception processing of uplink data or uplink signaling, and a delay of the network in performing downlink data packet assembly, retransmitted downlink data packet assembly, or uplink signaling packet assembly.

Optionally, the time sequence of the HARQ process includes a third time interval between each uplink subframe for transmitting uplink data and each downlink subframe for transmitting a PHICH and corresponding to the uplink subframe; where
each third time interval is set according to a first time interval between a corresponding uplink subframe for transmitting uplink data and a downlink subframe for transmitting DCI and corresponding to the uplink subframe, and satisfies: the third time interval is not less than a sum of a delay in transmission of the uplink data, a delay of the network in reception processing of the received uplink data, and a delay of the network in performing PHICH data packet assembly; and
the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, where n1 and N are positive integers, and a TTI multiplied by N is a sum of a delay in transmission of the DCI used for uplink scheduling, a delay of the UE in reception processing of the DCI used for uplink scheduling, and a delay of the UE in performing uplink data packet assembly.

Optionally, in a radio frame, a downlink-to-uplink switch-point periodicity is not greater than one half of a length of the radio frame, so that downlink-to-uplink switch-points are added in the radio frame.

Optionally, before the performing data transmission with the network, the method further includes: determining a transmission time interval TTI for performing data transmission with the network; and
the performing data transmission with the network includes: performing data transmission with the network by using the determined TTI; where
the TTI is shorter than 1 ms.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, a person skilled in the art can make various modifications and variations to the present invention without departing from the scope of the present invention. The present invention is intended to cover these modifications and variations provided that they fall within the scope of protection defined by the following claims and their equivalent technologies.

## Claims

1. An apparatus for data transmission in a Time Division Duplex TDD system, wherein the apparatus comprises:
a processing module, configured to determine a transmission time interval TTI for performing data transmission with user equipment UE; and
a transmission module, configured to perform data transmission with the UE by using the TTI determined by the processing module; wherein
the TTI is shorter than 1 ms.

2. The apparatus according to claim 1, wherein
the processing module is further configured to determine a TDD configuration and a special subframe S subframe configuration of a radio frame; and
the transmission module is specifically configured to perform data transmission with the UE by using the TTI, and the TDD configuration and the S subframe configuration of the radio frame that are determined by the processing module.

3. The apparatus according to claim 2, wherein
the S subframe configuration comprises:
if a cell coverage radius is greater than a preset coverage radius threshold, an S subframe in the radio frame comprises M consecutive subframes, and a length of a guard period GP in the S subframe is determined according to the cell coverage radius; wherein
M is an integer that is greater than 1.

4. The apparatus according to claim 2, wherein
the TDD configuration comprises: in the radio frame, a downlink-to-uplink switch-point periodicity is not greater than one half of a length of the radio frame.

5. The apparatus according to claim 2, wherein the S subframe configuration comprises:
if one radio frame comprises a plurality of S subframes, some S subframes comprise sounding reference signal SRS signals, and other S subframes do not comprise SRS signals.

6. The apparatus according to claim 1, wherein
the processing module is further configured to determine, when a broadcast channel occupies first two symbols in a second subframe in a radio frame, to skip transmitting a physical downlink control channel PDCCH on the first two symbols in the second subframe in the radio frame; and
the transmission module is specifically configured to skip transmitting the PDCCH on the first two symbols in the second subframe in the radio frame to the UE.

7. The apparatus according to claim 1, wherein
the processing module is further configured to determine that a broadcast channel occupies a first subframe in a radio frame; and
the transmission module is specifically configured to transmit the broadcast channel in the first subframe in the radio frame to the UE.

8. The apparatus according to claim 1, wherein
the processing module is further configured to determine a length of a physical random access channel PRACH, and if the determined length of the PRACH is greater than a length of a subframe, determine that the PRACH occupies C consecutive uplink subframes, wherein C is a positive integer; and
the transmission module is specifically configured to receive, by using the PRACH determined by the processing module, an uplink random access preamble transmitted by the UE.

9. The apparatus according to claim 8, wherein
the processing module is specifically configured to determine that an S subframe and/or P downlink subframes are comprised between the C consecutive uplink subframes occupied by the PRACH, wherein P is a positive integer.

10. The apparatus according to any one of claims 2 to 5, wherein
the transmission module is further configured to transmit, by using a first broadcast message or a radio resource control RRC message, the TDD configuration and the S subframe configuration determined by the processing module to the UE.

11. The apparatus according to any one of claims 2 to 5, wherein
the TDD configuration and the S subframe configuration of the radio frame are prescribed by the processing module with the UE.

12. The apparatus according to any one of claims 1 to 11, wherein
the transmission module is further configured to transmit, by using a second broadcast message or an RRC message, the TTI determined by the processing module to the UE.

13. The apparatus according to any one of claims 1 to 11, wherein
the TTI is prescribed with the UE.

14. The apparatus according to claims 1 to 13, wherein
the processing module is further configured to determine a time sequence of a hybrid automatic repeat request HARQ process for performing data transmission with the UE by the transmission module; and
the transmission module is specifically configured to perform data transmission with the UE by using the time sequence of the HARQ process that is determined by the processing module; wherein
the time sequence of the HARQ process comprises at least one of the following time sequences:
a first time interval between each downlink subframe for transmitting downlink control information DCI used for uplink scheduling and an uplink subframe for transmitting uplink data and corresponding to the downlink subframe, wherein the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, wherein n1 and N are positive integers, and a TTI multiplied by N is a sum of a delay in transmission of the DCI used for uplink scheduling, a delay in reception processing of the DCI used for uplink scheduling, and a delay in uplink data packet assembly;
a second time interval between each downlink subframe for transmitting a physical hybrid automatic repeat indicator channel PHICH and an uplink subframe for transmitting retransmitted uplink data and corresponding to the downlink subframe, wherein the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, wherein n2 and Q are positive integers, and a TTI multiplied by Q is a sum of a delay in transmission of the PHICH, a delay in reception processing of the PHICH, and a delay in retransmitted uplink data packet assembly;
a third time interval between each uplink subframe for transmitting uplink data and each downlink subframe for transmitting a PHICH and corresponding to the uplink subframe, wherein the third time interval is a TTI multiplied by n3, and is set according to a first time interval between a corresponding uplink subframe for transmitting uplink data and a downlink subframe for transmitting DCI used for uplink scheduling and corresponding to the uplink subframe, n3 is a positive integer, and the third time interval is not less than a sum of a delay in transmission of the uplink data, a delay in reception processing of the uplink data, and a delay in PHICH data packet assembly; or
a fourth time interval between each downlink subframe for transmitting downlink data and each uplink subframe for transmitting an uplink feedback and corresponding to the downlink subframe, wherein the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, wherein n4 and W are positive integers, and a TTI multiplied by W is a sum of a delay in transmission of the downlink data, a delay in reception processing of the downlink data, and a delay in uplink feedback packet assembly.

15. An apparatus for data transmission in a Time Division Duplex TDD system, wherein the apparatus comprises:
a processing module, configured to determine a transmission time interval TTI for performing data transmission with a network; and
a transmission module, configured to perform data transmission with the network by using the TTI determined by the processing module; wherein
the TTI is shorter than 1 ms.

16. The apparatus according to claim 15, wherein
the processing module is further configured to determine a TDD configuration and a special subframe S subframe configuration of a radio frame; and
the transmission module is specifically configured to perform data transmission with the network by using the TTI, and the TDD configuration and the S subframe configuration of the radio frame that are determined by the processing module.

17. The apparatus according to claim 16, wherein the S subframe configuration comprises:
if a cell coverage radius is greater than a preset coverage radius threshold, an S subframe in the radio frame comprises M consecutive subframes, and a length of a guard period GP in the S subframe is determined according to the cell coverage radius; wherein
M is an integer that is greater than 1.

18. The apparatus according to claim 16, wherein
the TDD configuration comprises: in the radio frame, a downlink-to-uplink switch-point periodicity is not greater than one half of a length of the radio frame.

19. The apparatus according to claim 16, wherein the S subframe configuration comprises:
if one radio frame comprises a plurality of S subframes, some S subframes comprise sounding reference signal SRS signals, and other S subframes do not comprise SRS signals.

20. The apparatus according to claim 15, wherein
the processing module is further configured to determine, when a broadcast channel occupies first two symbols in a second subframe in a radio frame, that a physical downlink control channel PDCCH is not transmitted on the first two symbols in the second subframe in the radio frame; and
the transmission module is specifically configured to skip receiving, on the first two symbols in the second subframe in the radio frame, the PDCCH transmitted by the network.

21. The apparatus according to claim 15, wherein
the processing module is further configured to determine that a broadcast channel occupies a first subframe in a radio frame; and
the transmission module is specifically configured to receive, in the first subframe in the radio frame, the broadcast channel transmitted by the network.

22. The apparatus according to claim 15, wherein
the processing module is further configured to determine a length of a physical random access channel PRACH, and if the determined length of the PRACH is greater than a length of a subframe, determine that the PRACH occupies C consecutive uplink subframes, wherein C is a positive integer; and
the transmission module is specifically configured to transmit an uplink random access preamble to the network by using the PRACH determined by the processing module.

23. The apparatus according to claim 22, wherein
the processing module is specifically configured to determine that an S subframe and/or P downlink subframes are comprised between the C consecutive uplink subframes occupied by the PRACH, wherein P is a positive integer.

24. The apparatus according to any one of claims 16 to 19, wherein
the transmission module is further configured to receive a TDD configuration and an S subframe configuration of a radio frame that are transmitted by the network by using a first broadcast message or a radio resource control RRC message; and
the processing module is specifically configured to use the TDD configuration and the S subframe configuration of the radio frame that are received by the transmission module, as the TDD configuration and the S subframe configuration of the radio frame that are determined.

25. The apparatus according to any one of claims 16 to 19, wherein
the TDD configuration and the S subframe configuration of the radio frame are prescribed by the processing module with the network.

26. The apparatus according to any one of claims 15 to 25, wherein
the transmission module is further configured to receive the TTI that is transmitted by the network by using a second broadcast message or a radio resource control RRC message; and
the processing module is specifically configured to use the TTI received by the transmission module, as the determined TTI.

27. The apparatus according to any one of claims 15 to 25, wherein
the TTI is prescribed by the processing module with the network.

28. The apparatus according to any one of claims 15 to 27, wherein
the processing module is further configured to determine a time sequence of a hybrid automatic repeat request HARQ process for performing data transmission with the network by the transmission module; and
the transmission module is specifically configured to perform data transmission with the network by using the time sequence of the HARQ process that is determined by the processing module; wherein
the time sequence of the HARQ process comprises at least one of the following time sequences:
a first time interval between each downlink subframe for transmitting downlink control information DCI used for uplink scheduling and an uplink subframe for transmitting uplink data and corresponding to the downlink subframe, wherein the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, wherein n1 and N are positive integers, and a TTI multiplied by N is a sum of a delay in transmission of the DCI used for uplink scheduling, a delay in reception processing of the DCI used for uplink scheduling, and a delay in uplink data packet assembly;
a second time interval between each downlink subframe for transmitting a physical hybrid automatic repeat indicator channel PHICH and an uplink subframe for transmitting retransmitted uplink data and corresponding to the downlink subframe, wherein the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, wherein n2 and Q are positive integers, and a TTI multiplied by Q is a sum of a delay in transmission of the PHICH, a delay in reception processing of the PHICH, and a delay in performing retransmitted uplink data packet assembly;
a third time interval between each uplink subframe for transmitting uplink data and each downlink subframe for transmitting a PHICH and corresponding to the uplink subframe, wherein the third time interval is a TTI multiplied by n3, and is set according to a first time interval between a corresponding uplink subframe for transmitting uplink data and a downlink subframe for transmitting DCI used for uplink scheduling and corresponding to the uplink subframe, n3 is a positive integer, and the third time interval is not less than a sum of a delay in transmission of the uplink data, a delay in reception processing of the uplink data, and a delay in PHICH data packet assembly; or
a fourth time interval between each downlink subframe for transmitting downlink data and each uplink subframe for transmitting an uplink feedback and corresponding to the downlink subframe, wherein the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, wherein n4 and W are positive integers, and a TTI multiplied by W is a sum of a delay in transmission of the downlink data, a delay in reception processing of the downlink data, and a delay in performing uplink feedback packet assembly.

29. A method for data transmission in a Time Division Duplex TDD system, wherein the method comprises:
determining a transmission time interval TTI for performing data transmission with user equipment UE; and
performing data transmission with the UE by using the determined TTI; wherein
the TTI is shorter than 1 ms.

30. The method according to claim 29, wherein
after the determining a TTI for performing data transmission with the UE, and before the performing data transmission with the UE, the method further comprises: determining a TDD configuration and a special subframe S subframe configuration of a radio frame; and
the performing data transmission with the UE by using the determined TTI comprises: performing data transmission with the UE by using the TTI, and the TDD configuration and the S subframe configuration of the radio frame that are determined.

31. The method according to claim 30, wherein
the S subframe configuration comprises:
if a cell coverage radius is greater than a preset coverage radius threshold, an S subframe in the radio frame comprises M consecutive subframes, and a length of a guard period GP in the S subframe is determined according to the cell coverage radius; wherein
M is an integer that is greater than 1.

32. The method according to claim 30, wherein
the TDD configuration comprises:
in the radio frame, a downlink-to-uplink switch-point periodicity is not greater than one half of a length of the radio frame.

33. The method according to claim 30, wherein
the S subframe configuration comprises:
if one radio frame comprises a plurality of S subframes, some S subframes comprise sounding reference signal SRS signals, and other S subframes do not comprise SRS signals.

34. The method according to claim 29, wherein after the determining a TTI for performing data transmission with the UE, and before the performing data transmission with the UE, the method further comprises:
if a broadcast channel occupies first two symbols in a second subframe in a radio frame, determining to skip transmitting a physical downlink control channel PDCCH on the first two symbols in the second subframe in the radio frame; and
the performing data transmission with the UE comprises: skipping transmitting the PDCCH on the first two symbols in the second subframe in the radio frame to the UE.

35. The method according to claim 29, wherein
after the determining a TTI for performing data transmission with the UE, and before the performing data transmission with the UE, the method further comprises: determining that a broadcast channel occupies a first subframe in a radio frame; and
the performing data transmission with the UE comprises: transmitting the broadcast channel in the first subframe in the radio frame to the UE.

36. The method according to claim 29, wherein after the determining a TTI for performing data transmission with the UE, and before the performing data transmission with the UE, the method further comprises:
determining a length of a physical random access channel PRACH; and
if the determined length of the PRACH is greater than a length of a subframe, determining that the PRACH occupies C consecutive uplink subframes, wherein C is a positive integer; and
the performing data transmission with the UE comprises: receiving, by using the determined PRACH, an uplink random access preamble transmitted by the UE.

37. The method according to claim 36, wherein after the determining that the PRACH occupies C consecutive uplink subframes, and before the performing data transmission with the UE, the method further comprises:
determining that an S subframe and/or P downlink subframes are comprised between the C consecutive uplink subframes occupied by the PRACH, wherein P is a positive integer.

38. The method according to any one of claims 30 to 33, wherein after the determining a TDD configuration and an S subframe configuration, and before the performing data transmission with the UE, the method further comprises:
transmitting, by using a first broadcast message or a radio resource control RRC message, the TDD configuration and the S subframe configuration that are determined to the UE.

39. The method according to any one of claims 30 to 33, wherein
the TDD configuration and the S subframe configuration of the radio frame are prescribed with the UE.

40. The method according to any one of claims 29 to 39, wherein after the determining a TTI for performing data transmission with the UE, and before the performing data transmission with the UE, the method further comprises:
transmitting, by using a second broadcast message or an RRC message, the determined TTI to the UE.

41. The method according to any one of claims 29 to 39, wherein
the TTI is prescribed with the UE.

42. The method according to any one of claims 29 to 41, wherein
after the determining a TTI for performing data transmission with the UE, and before the performing data transmission with the UE, the method further comprises: determining a time sequence of a hybrid automatic repeat request HARQ process for performing data transmission with the UE; and
the performing data transmission with the UE comprises: performing data transmission with the UE by using the determined time sequence of the HARQ process; wherein
the time sequence of the HARQ process comprises at least one of the following time sequences:
a first time interval between each downlink subframe for transmitting downlink control information DCI used for uplink scheduling and an uplink subframe for transmitting uplink data and corresponding to the downlink subframe, wherein the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, wherein n1 and N are positive integers, and a TTI multiplied by N is a sum of a delay in transmission of the DCI used for uplink scheduling, a delay in reception processing of the DCI used for uplink scheduling, and a delay in uplink data packet assembly;
a second time interval between each downlink subframe for transmitting a physical hybrid automatic repeat indicator channel PHICH and an uplink subframe for transmitting retransmitted uplink data and corresponding to the downlink subframe, wherein the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, wherein n2 and Q are positive integers, and a TTI multiplied by Q is a sum of a delay in transmission of the PHICH, a delay in reception processing of the PHICH, and a delay in retransmitted uplink data packet assembly;
a third time interval between each uplink subframe for transmitting uplink data and each downlink subframe for transmitting a PHICH and corresponding to the uplink subframe, wherein the third time interval is a TTI multiplied by n3, and is set according to a first time interval between a corresponding uplink subframe for transmitting uplink data and a downlink subframe for transmitting DCI used for uplink scheduling and corresponding to the uplink subframe, n3 is a positive integer, and the third time interval is not less than a sum of a delay in transmission of the uplink data, a delay in reception processing of the uplink data, and a delay in PHICH data packet assembly; or
a fourth time interval between each downlink subframe for transmitting downlink data and each uplink subframe for transmitting an uplink feedback and corresponding to the downlink subframe, wherein the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, wherein n4 and W are positive integers, and a TTI multiplied by W is a sum of a delay in transmission of the downlink data, a delay in reception processing of the downlink data, and a delay in uplink feedback packet assembly.

43. A method for data transmission in a Time Division Duplex TDD system, wherein the method comprises:
determining a transmission time interval TTI for performing data transmission with a network; and
performing data transmission with the network by using the determined TTI; wherein
the TTI is shorter than 1 ms.

44. The method according to claim 43, wherein
after the determining a TTI for performing data transmission with the network, and before the performing data transmission with the network, the method further comprises: determining a TDD configuration and a special subframe S subframe configuration of a radio frame; and
the performing data transmission with the network by using the determined TTI comprises: performing data transmission with the network by using the TTI, and the TDD configuration and the S subframe configuration of the radio frame that are determined.

45. The method according to claim 44, wherein
the S subframe configuration comprises:
if a cell coverage radius is greater than a preset coverage radius threshold, an S subframe in the radio frame comprises M consecutive subframes, and a length of a guard period GP in the S subframe is determined according to the cell coverage radius; wherein
M is an integer that is greater than 1.

46. The method according to claim 44, wherein
the TDD configuration comprises:
in the radio frame, a downlink-to-uplink switch-point periodicity is not greater than one half of a length of the radio frame.

47. The method according to claim 44, wherein
the S subframe configuration comprises:
if one radio frame comprises a plurality of S subframes, some S subframes comprise sounding reference signal SRS signals, and other S subframes do not comprise SRS signals.

48. The method according to claim 43, wherein
after the determining a TTI for performing data transmission with the network, and before the performing data transmission with the network, the method further comprises: when a broadcast channel occupies first two symbols in a second subframe in a radio frame, determining that a physical downlink control channel PDCCH is not transmitted on the first two symbols in the second subframe in the radio frame; and
the performing data transmission with the network comprises: skipping receiving, on the first two symbols in the second subframe in the radio frame, the PDCCH transmitted by the network.

49. The method according to claim 43, wherein
after the determining a TTI for performing data transmission with the network, and before the performing data transmission with the network, the method further comprises: determining that a broadcast channel occupies a first subframe in a radio frame; and
the performing data transmission with the network comprises: receiving, in the first subframe in the radio frame, the broadcast channel transmitted by the network.

50. The method according to claim 43, wherein
after the determining a TTI for performing data transmission with the network, and before the performing data transmission with the network, the method further comprises:
determining a length of a physical random access channel PRACH; and
if the determined length of the PRACH is greater than a length of a subframe, determining that the PRACH occupies C consecutive uplink subframes, wherein C is a positive integer; and
the performing data transmission with the network comprises: transmitting an uplink random access preamble to the network by using the determined PRACH.

51. The method according to claim 50, wherein after the determining that the PRACH occupies C consecutive uplink subframes, and before the performing data transmission with the network, the method further comprises:
determining that an S subframe and/or P downlink subframes are comprised between the C consecutive uplink subframes occupied by the PRACH, wherein P is a positive integer.

52. The method according to claims 44 to 47, wherein the determining a TDD configuration and a special subframe S subframe configuration of a radio frame comprises:
receiving a TDD configuration and a special subframe S subframe configuration of a radio frame that are transmitted by the network by using a first broadcast message or a radio resource control RRC; and
using the TDD configuration and the S subframe configuration that are received, as the TDD configuration or the S subframe configuration that is determined.

53. The method according to claims 44 to 47, wherein
the TDD configuration and the S subframe configuration are prescribed with the network.

54. The method according to any one of claims 43 to 53, wherein the determining a TTI for performing data transmission with the network comprises:
receiving the TTI that is transmitted by the network by using a second broadcast message or an RRC message; and
using the received TTI as the determined TTI for data transmission.

55. The method according to any one of claims 43 to 53, wherein
the TTI is prescribed with the network.

56. The method according to any one of claims 43 to 55, wherein after the determining a TTI for performing data transmission with the network, and before the performing data transmission with the network, the method further comprises:
determining a time sequence of a hybrid automatic repeat request HARQ process for performing data transmission with the network; and
the performing data transmission with the network comprises: performing data transmission with the network by using the determined time sequence of the HARQ process; wherein
the time sequence of the HARQ process comprises at least one of the following time sequences:
a first time interval between each downlink subframe for transmitting downlink control information DCI used for uplink scheduling and an uplink subframe for transmitting uplink data and corresponding to the downlink subframe, wherein the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, wherein n1 and N are positive integers, and a TTI multiplied by N is a sum of a delay in transmission of the DCI used for uplink scheduling, a delay in reception processing of the DCI used for uplink scheduling, and a delay in uplink data packet assembly;
a second time interval between each downlink subframe for transmitting a physical hybrid automatic repeat indicator channel PHICH and an uplink subframe for transmitting retransmitted uplink data and corresponding to the downlink subframe, wherein the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, wherein n2 and Q are positive integers, and a TTI multiplied by Q is a sum of a delay in transmission of the PHICH, a delay in reception processing of the PHICH, and a delay in retransmitted uplink data packet assembly;
a third time interval between each uplink subframe for transmitting uplink data and each downlink subframe for transmitting a PHICH and corresponding to the uplink subframe, wherein the third time interval is a TTI multiplied by n3, and is set according to a first time interval between a corresponding uplink subframe for transmitting uplink data and a downlink subframe for transmitting DCI used for uplink scheduling and corresponding to the uplink subframe, n3 is a positive integer, and the third time interval is not less than a sum of a delay in transmission of the uplink data, a delay in reception processing of the uplink data, and a delay in PHICH data packet assembly; or
a fourth time interval between each downlink subframe for transmitting downlink data and each uplink subframe for transmitting an uplink feedback and corresponding to the downlink subframe, wherein the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, wherein n4 and W are positive integers, and a TTI multiplied by W is a sum of a delay in transmission of the downlink data, a delay in reception processing of the downlink data, and a delay of UE in performing uplink feedback packet assembly.

57. An apparatus for data transmission in a Time Division Duplex TDD system, wherein the apparatus comprises:
a processing module, configured to determine, according to a processing delay of user equipment UE, a time sequence of a hybrid automatic repeat request HARQ process for performing data transmission with the UE; and
a transmission module, configured to perform data transmission with the UE according to the time sequence of the HARQ process that is determined by the processing module.

58. The apparatus according to claim 57, wherein
the processing delay of the UE comprises: a delay of the UE in reception processing of downlink data or downlink signaling, and a delay of the UE in performing uplink data packet assembly, retransmitted uplink data packet assembly, or uplink signaling packet assembly.

59. The apparatus according to claim 58, wherein the time sequence of the HARQ process comprises at least one of the following time sequences:
a first time interval between each downlink subframe for transmitting downlink control information DCI used for uplink scheduling and an uplink subframe for transmitting uplink data and corresponding to the downlink subframe;
a second time interval between each downlink subframe for transmitting a physical hybrid automatic repeat indicator channel PHICH and an uplink subframe for transmitting retransmitted uplink data and corresponding to the downlink subframe; or
a fourth time interval between each downlink subframe for transmitting downlink data and each uplink subframe for transmitting an uplink feedback and corresponding to the downlink subframe; wherein
the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, wherein n1 and N are positive integers, and a TTI multiplied by N is a sum of a delay in transmission of the DCI used for uplink scheduling, a delay of the UE in reception processing of the DCI used for uplink scheduling, and a delay of the UE in performing uplink data packet assembly;
the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, wherein n2 and Q are positive integers, and a TTI multiplied by Q is a sum of a delay in transmission of the PHICH, a delay of the UE in reception processing of the PHICH, and a delay of the UE in performing retransmitted uplink data packet assembly; and
the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, wherein n4 and W are positive integers, and a TTI multiplied by W is a sum of a delay in transmission of the downlink data, a delay of the UE in reception processing of the downlink data, and a delay of the UE in performing uplink feedback packet assembly.

60. The apparatus according to any one of claims 57 to 59, wherein
in a radio frame, a downlink-to-uplink switch-point periodicity is not greater than one half of a length of the radio frame.

61. The apparatus according to any one of claims 57 to 61, wherein
the processing module is further configured to determine, before the transmission module performs data transmission with the UE, a transmission time interval TTI for performing data transmission with the UE; and
the transmission module is specifically configured to perform data transmission with the UE by using the TTI and the time sequence of the HARQ process that are determined by the processing module; wherein
the TTI is shorter than 1 ms.

62. An apparatus for data transmission in a Time Division Duplex TDD system, wherein the apparatus comprises:
a processing module, configured to determine, according to a processing delay of a network, a time sequence of a hybrid automatic repeat request HARQ process for performing data transmission with the network; and
a transmission module, configured to perform data transmission with the network according to the time sequence of the HARQ process that is determined by the processing module.

63. The apparatus according to claim 62, wherein
the processing delay of the network comprises:
a delay of the network in reception processing of uplink data or uplink signaling, and a delay of the network in performing downlink data packet assembly, retransmitted downlink data packet assembly, or uplink signaling packet assembly.

64. The apparatus according to claim 63, wherein
the time sequence of the HARQ process comprises a third time interval between each uplink subframe for transmitting uplink data and each downlink subframe for transmitting a PHICH and corresponding to the uplink subframe; wherein
each third time interval is set according to a first time interval between a corresponding uplink subframe for transmitting uplink data and a downlink subframe for transmitting DCI and corresponding to the uplink subframe, and satisfies: the third time interval is not less than a sum of a delay in transmission of the uplink data, a delay of the network in reception processing of the received uplink data, and a delay of the network in performing PHICH data packet assembly; and
the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, wherein n1 and N are positive integers, and a TTI multiplied by N is a sum of a delay in transmission of the DCI used for uplink scheduling, a delay in reception processing of the DCI used for uplink scheduling, and a delay in uplink data packet assembly.

65. The apparatus according to any one of claims 62 to 64, wherein
in a radio frame, a downlink-to-uplink switch-point periodicity is not greater than one half of a length of the radio frame.

66. The apparatus according to any one of claims 62 to 65, wherein
the processing module is further configured to determine, before the transmission module performs data transmission with the network, a transmission time interval TTI for performing data transmission with the network; and
the transmission module is specifically configured to perform data transmission with the network by using the TTI determined by the processing module; wherein
the TTI is shorter than 1 ms.

67. A method for data transmission in a Time Division Duplex TDD system, wherein the method comprises:
determining, according to a processing delay of user equipment UE, a time sequence of a hybrid automatic repeat request HARQ process for performing data transmission with the UE; and
performing data transmission with the UE according to the determined time sequence of the HARQ process.

68. The method according to claim 67, wherein
the processing delay of the UE comprises: a delay of the UE in reception processing of downlink data or downlink signaling, and a delay of the UE in performing uplink data packet assembly, retransmitted uplink data packet assembly, or uplink signaling packet assembly.

69. The method according to claim 68, wherein
the time sequence of the HARQ process comprises one or more of the following time sequences:
a first time interval between each downlink subframe for transmitting downlink control information DCI used for uplink scheduling and an uplink subframe for transmitting uplink data and corresponding to the downlink subframe;
a second time interval between each downlink subframe for transmitting a physical hybrid automatic repeat indicator channel PHICH and an uplink subframe for transmitting retransmitted uplink data and corresponding to the downlink subframe; or
a fourth time interval between each downlink subframe for transmitting downlink data and each uplink subframe for transmitting an uplink feedback and corresponding to the downlink subframe; wherein
the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, wherein n1 and N are positive integers, and a TTI multiplied by N is a sum of a delay in transmission of the DCI used for uplink scheduling, a delay of the UE in reception processing of the DCI used for uplink scheduling, and a delay of the UE in performing uplink data packet assembly;
the second time interval is a TTI multiplied by n2, and satisfies: n2 is not less than Q, and a second time interval that corresponds to an uplink subframe for transmitting retransmitted uplink data and having a longest time interval from each downlink subframe for transmitting the PHICH is shortest, wherein n2 and Q are positive integers, and a TTI multiplied by Q is a sum of a delay in transmission of the PHICH, a delay of the UE in reception processing of the PHICH, and a delay of the UE in performing retransmitted uplink data packet assembly; and
the fourth time interval is a TTI multiplied by n4, and satisfies: n4 is not less than W, and a fourth time interval that corresponds to an uplink subframe for transmitting an uplink feedback and having a longest time interval from each downlink subframe for transmitting the downlink data is shortest, wherein n4 and W are positive integers, and a TTI multiplied by W is a sum of a delay in transmission of the downlink data, a delay of the UE in reception processing of the downlink data, and a delay of the UE in performing uplink feedback packet assembly.

70. The apparatus according to any one of claims 67 to 69, wherein
in a radio frame, a downlink-to-uplink switch-point periodicity is not greater than one half of a length of the radio frame.

71. The method according to any one of claims 67 to 70, wherein
before the performing data transmission with the UE, the method further comprises: determining a transmission time interval TTI for performing data transmission with the UE; and
the performing data transmission with the UE comprises: performing data transmission with the UE by using the determined TTI; wherein
the TTI is shorter than 1 ms.

72. A method for data transmission in a Time Division Duplex TDD system, wherein the method comprises:
determining, according to a processing delay of a network, a time sequence of a hybrid automatic repeat request HARQ process for performing data transmission with the network; and
performing data transmission with the network according to the determined time sequence of the HARQ process.

73. The method according to claim 72, wherein
the processing delay of the network comprises:
a delay of the network in reception processing of uplink data or uplink signaling, and a delay of the network in performing downlink data packet assembly, retransmitted downlink data packet assembly, or uplink signaling packet assembly.

74. The method according to claim 73, wherein
the time sequence of the HARQ process comprises a third time interval between each uplink subframe for transmitting uplink data and each downlink subframe for transmitting a PHICH and corresponding to the uplink subframe; wherein
each third time interval is set according to a first time interval between a corresponding uplink subframe for transmitting uplink data and a downlink subframe for transmitting DCI and corresponding to the uplink subframe, and satisfies: the third time interval is not less than a sum of a delay in transmission of the uplink data, a delay of the network in reception processing of the received uplink data, and a delay of the network in performing PHICH data packet assembly; and
the first time interval is a TTI multiplied by n1, and satisfies: n1 is not less than N, and when one uplink HARQ process is scheduled by one downlink subframe, a first time interval that corresponds to an uplink subframe for transmitting uplink data and having a longest time interval from each downlink subframe for transmitting the DCI used for uplink scheduling is shortest, wherein n1 and N are positive integers, and a TTI multiplied by N is a sum of a delay in transmission of the DCI used for uplink scheduling, a delay of the UE in reception processing of the DCI used for uplink scheduling, and a delay of the UE in performing uplink data packet assembly.

75. The apparatus according to any one of claims 72 to 74, wherein
in a radio frame, a downlink-to-uplink switch-point periodicity is not greater than one half of a length of the radio frame.

76. The method according to any one of claims 72 to 75, wherein
before the performing data transmission with the network, the method further comprises: determining a transmission time interval TTI for performing data transmission with the network; and
the performing data transmission with the network comprises: performing data transmission with the network by using the determined TTI; wherein
the TTI is shorter than 1 ms.
